(19) Europäisches Patentamt
European Patent Office
Office européen des brevets

(11) **EP 4 500 449 B1**

(12) **EUROPÄISCHE PATENTSCHRIFT**

(45) Veröffentlichungstag und Bekanntmachung des Hinweises auf die Patenterteilung:
**19.11.2025   Patentblatt 2025/47**

(21) Anmeldenummer: **23715115.4**

(22) Anmeldetag: **28.03.2023**

(51) Internationale Patentklassifikation (IPC):
*G06T 5/73* *(2024.01)*

(52) Gemeinsame Patentklassifikation (CPC):
**G06T 5/73**; G06T 2207/20012

(86) Internationale Anmeldenummer:
**PCT/EP2023/057903**

(87) Internationale Veröffentlichungsnummer:
**WO 2023/186848 (05.10.2023 Gazette 2023/40)**

(54) **VERFAHREN ZUR BILDKORREKTUR VON BILDUNSCHÄRFE IN EINER DIGITALEN BILDAUFNAHME**

METHOD FOR CORRECTING IMAGE BLURRING IN A DIGITAL IMAGE CAPTURE

PROCÉDÉ DE CORRECTION D'IMAGE DE FLOU D'IMAGE DANS UNE CAPTURE D'IMAGE NUMÉRIQUE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **29.03.2022  AT 502032022**

(43) Veröffentlichungstag der Anmeldung:
**05.02.2025   Patentblatt 2025/06**

(73) Patentinhaber: **Vexcel Imaging GmbH**
**8010 Graz (AT)**

(72) Erfinder:
• **PONTICELLI, Martin**
  **8041 Graz (AT)**
• **DOHR, Stefan**
  **8720 Knittelfeld (AT)**
• **MUICK, Marc**
  **8071 Hausmannstätten (AT)**
• **NEUNER, Christian**
  **8042 Graz (AT)**
• **GRUBER, Michael**
  **8044 Graz (AT)**

(74) Vertreter: **Patentanwälte Pinter & Weiss OG**
**Prinz-Eugen-Straße 70**
**1040 Wien (AT)**

(56) Entgegenhaltungen:
EP-A2- 2 432 215          WO-A1-2006/094871
WO-A1-2021/170745      WO-A2-2008/131438
US-A1- 2021 158 490

• ANKIT GUPTA ET AL: "Single Image Deblurring Using Motion Density Functions", 5 September 2010, 16TH EUROPEAN CONFERENCE - COMPUTER VISION - ECCV 2020, CORNELL UNIVERSITY LIBRARY, 201 OLIN LIBRARY CORNELL UNIVERSITY ITHACA, NY 14853, PAGE(S) 171 - 184, XP019150506
• JOSHI N ET AL: "Image deblurring using inertial measurement sensors", ACM TRANS. GRAPH., ACM, US, vol. 29, no. 4, 30, 26 July 2010 (2010-07-26), pages 1 - 9, XP058312448, ISBN: 978-1-4503-0210-4, DOI: 10.1145/ 1833349.1778767
• BAE H ET AL: "Accurate motion deblurring using camera motion tracking and scene depth", APPLICATIONS OF COMPUTER VISION (WACV), 2013 IEEE WORKSHOP ON, IEEE, 15 January 2013 (2013-01-15), pages 148 - 153, XP032339483, ISBN: 978-1-4673-5053-2, DOI: 10.1109/WACV.2013.6475012

- SHAH C A ET AL: "Automated Blur Detection and Removal in Airborne Imaging Systems using IMU Data", INTERNATIONAL ARCHIVES OF THE PHOTOGRAMMETRY, REMOTE SENSING AND SPATIAL INFORMATION SCIENCES,, vol. XXXIX-B1, 2012, pages 321 - 323, XP002803053, DOI: 10.5194/ISPRSARCHIVES-XXXIX-B1-321-2012

- HU Z ET AL: "Fast Non-uniform Deblurring using Constrained Camera Pose Subspace", PROCEEDINGS OF THE BRITISH MACHINE VISION CONFERENCE, 2012, Surrey, UK, pages 1 - 11, XP093054200, ISBN: 978-1-901725-46-9, DOI: 10.5244/C.26.136

## Beschreibung

Die gegenständliche Erfindung betrifft ein Verfahren zur Bildkorrektur von Bildunschärfe in einer digitalen Bildaufnahme eines Objekts, wobei die Bildaufnahme mit einem Bildsensor einer Kamera aufgenommen wird und sich aufgrund einer Relativbewegung zwischen der Kamera und dem Objekt während einer Belichtungszeit der Bildaufnahme die Abbildung eines Objektpunktes des Objekts auf einen Bildpunkt in der Bildaufnahme b(p) ändert, sodass die Abbildung des Objektpunktes in der Bildaufnahme während der Belichtungszeit T zwischen einen Belichtungsstarzeitpunkt Ts und einem Belichtungsendzeitpunkt $T_E$ entlang einer Bildtrajektorie wandert und dadurch in der Bildaufnahme eine Bildunschärfe entsteht, wobei ein Zusammenhang zwischen einem Bildpunkt in der unscharfen Bildaufnahme b(p) und einem Bildpunkt einer geschärften Bildaufnahme I(p) mit einem mathematischen Modell modelliert wird, wobei das Modell die Relativbewegung zwischen der Kamera und dem Objekt während der Belichtungszeit durch einen Transformationsoperator H berücksichtigt und eine Dichtefunktion $\omega$ enthält, die einen Einfluss der Kamera auf die Belichtung während der Belichtungszeit beschreibt, und zur Bildkorrektur aus der unscharfen Bildaufnahme am Bildpunkt und dem Modell ein geschärftes Bild am Bildpunkt ermittelt wird.

Bei der Aufnahme eines Bildes mit einer Kamera von einem bewegten Fahrzeug aus ergeben sich aufgrund der Bewegung des Fahrzeugs während der Belichtungszeit Bildunschärfen. Diese sind darin begründet, dass sich die Kamera während der Belichtungszeit relativ zum aufzunehmenden Objekt bewegt und somit während der Belichtungszeit ein Bildpunkt (Pixel im Falle einer Digitalaufnahme) der Kamera auf unterschiedliche Punkte des Objekts gerichtet ist. Im Falle einer üblicherweise eingesetzten Digitalkamera ist ein Bildsensor für jeden Kanal (beispielsweise 3 Kanäle bei einem RGB-Sensor) mit einer Anordnung von Lichtdetektoren vorgesehen, wobei jeder Lichtdetektor einen Bildpunkt (Pixel) repräsentiert. Häufig verwendete Bildsensoren sind bekannte CCD-Sensoren oder CMOS-Sensoren. Die Relativbewegung zwischen dem aufzunehmenden Objekt und der Kamera kann auf der Bewegung des Fahrzeugs beruhen, auf der Bewegung der Kamera relativ zum Fahrzeug, auf der Bewegung des Objekts oder auf einer beliebigen Kombination dieser. Derartige Bildunschärfen lassen sich während der Aufnahme des Bildes mit erheblichem technischem Aufwand zwar einschränken, aber nicht vollständig vermeiden.

Zur Verringerung der Bildunschärfe ist es beispielsweise bekannt, den Bildsensor der Kamera während der Belichtungszeit mittels eines Antriebs in einer auf eine Bewegung des Fahrzeuges (also beispielsweise auf die Fluggeschwindigkeit eines Flugzeugs oder eines anderen Fluggeräts) abgestimmten Bewegung zu verschieben, sodass jeder Pixel des Bildsensors möglichst genau auf einen bestimmten Punkt des Objekts ausgerichtet bleibt. Das ist auch unter Forward Motion Compensation bekannt. Dadurch kann jedoch nur eine bekannte Vorwärtsbewegung des Fahrzeuges ausgeglichen werden. Andere Bewegungen und Beschleunigungen, insbesondere ein Nicken, Gieren oder Rollen des Fahrzeuges, wie es bei Flugzeugen beispielsweise beim Durchfliegen von Turbulenzen oder aufgrund von Vibrationen auftreten kann, können auf diese Weise nicht ausgeglichen werden. Abgesehen davon erhöht eine Forward Motion Compensation natürlich auch die Komplexität und Kosten des Kamerasystems.

Bis zu einem gewissen Ausmaß können störende und unerwartete Bewegungen des Fahrzeugs durch eine stabilisierende Kameraaufhängung ausgeglichen werden, doch auch dieser sind technische Grenzen gesetzt, sodass sich damit durch Bewegung hervorgerufene Bildunschärfen nur unzureichend oder gar nicht beheben lassen. Auch eine solche Kameraaufhängung erhöht zudem die Komplexität und die Kosten des Kamerasystems.

In letzter Zeit haben insbesondere Bildschärfungsverfahren verbreitet Einsatz gefunden. Mit solchen Bildschärfungsverfahren können Bildunschärfen im aufgenommenen digitalen Bild nachträglich kompensiert werden. Dabei werden üblicherweise Faltungsmatrizen (oftmals "Blur Kernel" genannt) errechnet, die das scharfe Bild durch eine mathematische Faltungsoperation auf das unscharfe Bild abbilden. Diesem Ansatz liegt die Idee zugrunde, dass das unscharfe, aufgenommene Bild und das darin versteckte scharfe Bild über den Blur Kernel verbunden sind. Kennt man den Blur Kernel, kann in Folge durch eine mathematische Entfaltungsoperation (Umkehroperation zur Faltung) das scharfe Bild aus dem unscharfen Bild berechnet werden. Das grundlegende Problem dabei ist, dass der Blur Kernel üblicherweise nicht bekannt ist. In gewissen Ansätzen wird der Blur Kernel aus dem unscharfen Bild abgeleitet, was auch als Blind-Deconvolution bezeichnet wird. In anderen Ansätzen wird der Blur Kernel aus der bekannten Bewegung der Kamera relativ zum aufgenommenen Objekt ermittelt, was auch als Non-Blind-Deconvolution bezeichnet wird. Um die Bewegung der Kamera zu erfassen können Beschleunigungssensoren, Gyrosensoren, Trägheitssensoren usw. an der Kamera verwendet werden. Mit der bekannten Bewegung des Fahrzeugs in einem Geokoordinatensystem und gegebenenfalls mit der bekannten Bewegung der Kamera relativ zum Fahrzeug kann auf die Relativbewegung der Kamera zum Objekt rückgeschlossen werden. Ein Beispiel hierfür findet sich in WO 2021/170745 A1. Insbesondere zur Bestimmung des Blur Kernels und zur Ermittlung des scharfen Bildes mit Hilfe des Blur Kernels gibt es eine Fülle von Literatur und bekannten Verfahren, von denen im Folgenden nur einige wenige genannt werden.

Im Fachartikel "Image Deblurring using Inertial Measurement Sensors", Neel Joshi et al., ACM SIGGRAPH 2010 Papers, SIGGRAPH '10, New York, NY, USA, 2010, Association for Computing Machinery wird zuerst die Kamerabewegung mittels Trägheitssensoren bestimmt und daraus der Blur Kernel ermittelt, mit dem das scharfe Bild mittels Entfaltung ermittelt wird.

Der Fachartikel "Accurate Motion Deblurring using Camera Motion Tracking and Scene Depth", Hyeoungho Bae et al., 2013 IEEE Workshop on Applications of Computer Vision offenbart die Ermittlung einer Blur Kernels zur Bildschärfung, wobei eine Kamerabewegung während der Aufnahme berücksichtigt wird. Weiters wird auf Basis einer Sensormessung ein Tiefenprofil erstellt und bei der Erstellung von Faltungsmatrizen für unterschiedliche Bildbereiche berücksichtigt.

Der Fachartikel "Automated Blur Detection and Removal in Airborne Imaging Systems using IMU Data", C.A. Shah et al., International Archives of the Photogrammetry, Remote Sensing and Spatial Information Sciences, Volume XXXIX-B1, 2012 betrifft die Bildschärfung von Flugaufnahmen. Nicken, Gieren und/oder Rollen des Flugzeugs während der Aufnahme werden mit einem Trägheitssensor gemessen und bei der Erstellung des Blur Kernels berücksichtigt.

In "Fast Non-uniform Deblurring using Constrained Camera Pose Subspace", Zhe Hu et al., Proceedings British Machine Vision Conference 2012, p.136.1-136.11 wird vorgeschlagen, den Blur Kernel als Summe einer zeitlichen Abfolge von Bildern, die während der Bewegung der Kamera und während Belichtungszeit entstehen, zu modellieren. Es wird auch die Bewegung der Kamera aus dem Bildinhalt geschätzt, wobei ein Set an möglichen Kameraposen (Position und Orientierung) definiert ist und der Einfluss dieser Posen auf die Bildunschärfe mit einer Dichtefunktion beschrieben und gewichtet wird. Die Bewegung wird durch Berechnung der Gewichte der möglichen Kameraposen aus diesem Set bestimmt. Hierin wird somit beschrieben, dass die Dichtefunktion, bzw. die Gewichte, die die Dichtefunktion beschreibt, durch eine Bildanalyse des aufgenommenen Bildes ermittelt werden. Das ähnelt einer bekannten Blind-Deconvolution. Das hat aber den Nachteil, dass sehr große Datenmengen verarbeitet werden müssen, was auch nachteilig für die benötigte Rechenzeit ist. Abgesehen davon, hängt die Qualität des extrahierten Blur-Kernels auch vom Bildinhalt ab. In Bereichen mit wenigen markanten Strukturen im Bild kann dieser Ansatz fehlschlagen, weil die Dichtefunktion in diesen Bereichen gar nicht oder nur ungenau ermittelbar sein kann.

Vor allem im Bereich der Photogrammetrie sind die Anforderungen an die Qualität von Bildaufnahmen sehr hoch. Bildaufnahmen werden dabei häufig mittels bewegter Fahrzeuge durchgeführt, oftmals mittels Luftfahrzeuge. Die obigen Bildschärfungsverfahren liefern zwar gute Ergebnisse, die allerdings für viele Anwendungen im Bereich der Photogrammetrie nicht befriedigend bzw. ausreichend sind. D.h., dass die erzielbaren Bildschärfen mit den bekannten Bildschärfungsverfahren noch nicht ausreichend sind, beispielsweise für Anwendungen im Bereich der Photogrammetrie oder Geomatik. Ein anderes Problem der bekannten Bildschärfungsverfahren liegt darin, dass sich die Position von Objektstrukturen, wie beispielsweise eine Kontur eines Gebäudes, im aufgenommenen Bild verschieben kann.

Auch das ist im Bereich der Photogrammetrie in hohem Grade unerwünscht, weil es in vielen Anwendungen gerade auch auf die Position und Lage von Objektstrukturen ankommt.

Es besteht daher ein Bedarf an Vorrichtungen und Verfahren, die mit möglichst geringem Aufwand bei einer Relativbewegung zwischen einem aufzunehmenden Objekt und einer Kamera Bildaufnahmen mit hoher Qualität, sprich hoher Bildschärfe, ermöglichen.

Das wird erreicht, indem im mathematischen Modell eine bildpunktabhängige Dichtefunktion verwendet wird, mit der ein unterschiedlicher Einfluss der Kamera auf die Belichtung verschiedener Bildpunkte der Bildaufnahme abgebildet wird.

Damit ist es möglich, für jeden einzelnen Bildpunkt, zumindest für betroffene Bildpunkte, den Einfluss der Kamera auf die Belichtung der Bildaufnahme, und damit den Einfluss der Eigenschaften der Kamera auf die Bildunschärfe, abzubilden. Das erlaubt die Korrektur der Bildunschärfe über ein bisher bekanntes Maß hinaus.

Besonders vorteilhaft ist es, wenn der diskretisierte Bildbereich in eine Mehrzahl von Bildabschnitten aufgeteilt wird, und für die Bildpunkte zumindest eines Bildabschnittes ein mathematisches Modell mit einer bildpunktabhängigen Dichtefunktion verwendet wird und für einen anderen Bildabschnittes ein mathematisches Modell mit einer bildpunktkonstanten Dichtefunktion und konstanter Bildtrajektorie verwendet wird, sodass sich für die Bildpunkte dieses Bildabschnitts die geschärfte Bildaufnahme durch eine mathematische Entfaltung ermittelt werden kann, was weniger Rechenaufwand benötigt. Die geschärfte Bildaufnahme kann dann einfach aus den geschärften Bildaufnahmen der einzelnen Bildabschnitte zusammengesetzt werden.

Bei einer Kamera mit einer mechanischen Verschlussvorrichtung kann mit der bildpunktabhängigen Dichtefunktion ein Einfluss einer Öffnungs- oder Schließbewegung der mechanischen Verschlussvorrichtung auf die Belichtung verschiedener Bildpunkte der Bildaufnahme abgebildet werden. Damit kann der Einfluss des Schließvorganges der Verschlussvorrichtung, oder auch des Öffnungsvorganges der Verschlussvorrichtung, auf die Belichtung des Bildsensors abgebildet werden. Das ist besonders vorteilhaft, weil aufgrund der endlichen Beschleunigung und Geschwindigkeit der Verschlussvorrichtung die Belichtung an unterschiedlichen Bildpunkten während des Schließvorganges oder Öffnungsvorganges unterschiedlich sein wird. Dieser Einfluss kann mit der bildpunktabhängigen Dichtefunktion besser erfasst werden, was zu verbesserten geschärften Bildaufnahmen führt.

Die gegenständliche Erfindung wird nachfolgend unter Bezugnahme auf die Figuren 1 bis 3 näher erläutert, die beispielhaft, schematisch und nicht einschränkend vorteilhafte Ausgestaltungen der Erfindung zeigen. Dabei zeigt

Fig.1 Zusammenhänge bei einer Bildaufnahme eines Objekts mit einem bewegten Fahrzeug,

Fig.2 eine idealisierte Verschlussbewegung einer mechanischen Verschlussvorrichtung und
Fig.3 ein Beispiel einer Dichtefunktion eines Bildpunktes der Bildaufnahme.

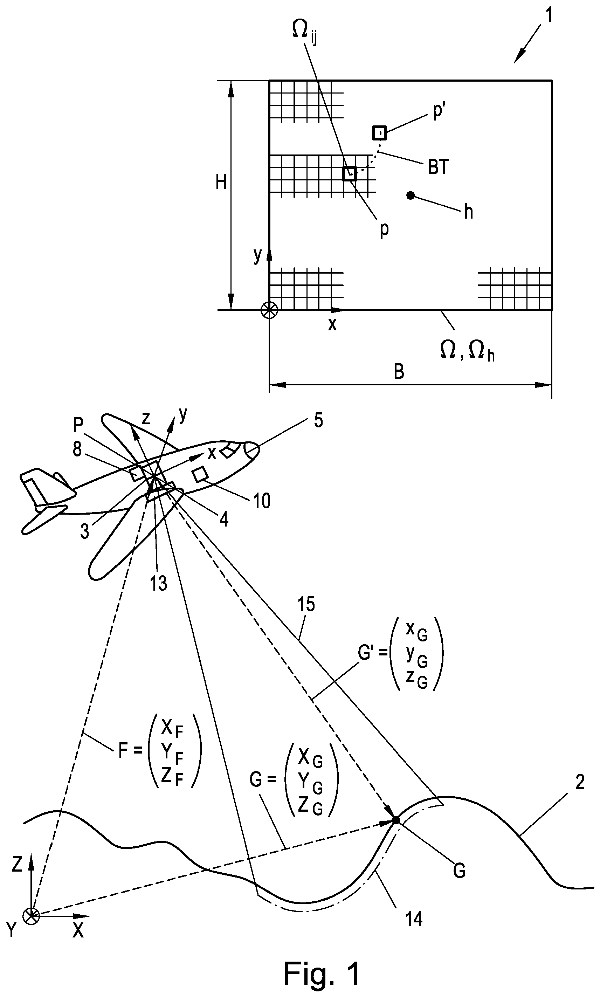

In Fig.1 ist schematisch ein Fahrzeug 5 (hier ein Luftfahrzeug, beispielsweise ein Flugzeug oder eine Drohne) dargestellt, welches sich bewegt, (hier über Grund) und dabei mit einer an dem Fahrzeug 5 montierten Kamera 3 Bildaufnahmen 1 eines Objekts 2, hier einer Geländestruktur, erstellt. In Fig.1 ist in einer schematischen Darstellung eine Bildaufnahme 1, die von dem Fahrzeug 5 aus mit der Kamera 3 aufgenommen wurde, beispielhaft dargestellt. Die Bildaufnahme 1 umfasst einen Bildbereich $\Omega$, der alle Bildpunkte p der Bildaufnahme 1 enthält. Die Bildaufnahme 1 ist eine digitale Bildaufnahme, mit einer Breite B von Pixeln und einer Höhe H von Pixeln (digitale Bildpunkte p). Die Bildaufnahme 1 entsteht an einer Bildebene 4 der Kamera 3, an der ein Bildsensor (nicht dargestellt) mit einer Anordnung an Lichtdetektoren angeordnet ist, die die Bildpunkte p ausbilden.

Die Erfindung wird ohne Einschränkung der Allgemeinheit für eine Bildaufnahme 1 mit einem Kanal (ein bestimmter Wellenlängenbereich des Lichts) des Lichtspektrums beschrieben, kann aber natürlich auf mehrere Kanäle verallgemeinert werden.

Mithilfe von Geodaten kann jedem Punkt des Objekts 2 (in Fig. 1 ist ein Objektpunkt G beispielhaft dargestellt) eine eindeutig definierte räumliche Lage in einem raumfesten Geokoordinatensystem (X, Y, Z) zugeordnet werden. Beispielsweise lässt sich die Position des Objektpunkts G in dem Geokoordinatensystem durch den Vektor $G=(X_G, Y_G, Z_G)$ beschreiben und die Position des Fahrzeugs 5 (oder eines Referenzpunkts dieses Fahrzeugs 5) lässt sich im Geokoordinatensystem durch den Vektor $F=(X_F, Y_F, Z_F)$ beschreiben, wobei der Vektor F auf ein vorgegebenes Fahrzeugkoordinatensystem bezogen sein kann.

Der Kamera 3 ist ein körperfestes Kamerakoordinatensystem (x, y, z) zugeordnet. Der Koordinatenursprung des Kamerakoordinatensystems (x, y, z) ist üblicherweise im optischen Zentrum der Kamera 3 angeordnet, wobei die optische Achse der Kamera 3 üblicherweise mit der z-Achse des Kamerakoordinatensystems zusammenfällt. Im Abstand der Brennweite f > 0 vom optischen Zentrum befindet sich die Bildebene 4 der Kamera 3, auf die das betrachtete Objekt 2 zweidimensional abgebildet wird. Die Bildebene 4 ist dabei als parallel zur xy-Ebene des Kamerakoordinatensystems ausgerichtet angenommen und besitzt ein eigenes, lokales 2D-Bildkoordinatensystem, beispielsweise in einer Ecke des Bildbereichs $\Omega$.

Die Kamera 3 mit Bildebene 4 kann in dem Fahrzeug 5 fix montiert sein, sodass ein Fahrzeugkoordinatensystem mit dem Kamerakoordinatensystem (x, y, z) zusammenfallen kann und sich seine Lage in Bezug auf das Fahrzeugkoordinatensystem nicht ändert. Gegebenenfalls kann die Kamera 3 auch in einer relativ zum Fahrzeug 5 bewegbaren Montagestruktur angeordnet sein, beispielsweise einer stabilisierenden Kameraaufhängung, welche Bewegungen des Fahrzeugs 5 bis zu einem gewissen Ausmaß ausgleicht, sodass die Ausrichtung der Kamera 3 in Bezug auf eine Fahrt- bzw. Flugrichtung möglichst konstant bleibt. Das Kamerakoordinatensystems (x, y, z) kann sich damit relativ zum Fahrzeugkoordinatensystem auch bewegen. Die Lage und Orientierung des Kamerakoordinatensystems (x, y, z) bezogen auf das Fahrzeugkoordinatensystem wird aber als stets bekannt vorausgesetzt. Beispielsweise kann ein geeigneter Bewegungssensor 8, wie ein Beschleunigungssensor, Gyrosensor, Trägheitssensor usw., vorgesehen sein, um die Bewegung der Kamera 3 relativ zum Fahrzeug 5 im Raum zu erfassen.

Die Lage und Orientierung des Fahrzeugs 5 im Geokoordinatensystem (X, Y, Z) kann aufgrund der bekannten Bewegungsdaten des Fahrzeugs 5 (beispielsweise Flugdaten eines Flugzeugs) ebenso als bekannt vorausgesetzt werden, wobei das Fahrzeug 5 in Bezug auf das Geokoordinatensystem (X, Y, Z) Bewegungen und Beschleunigungen in allen sechs Freiheitsgraden ausführen kann. Beispielsweise kann am Fahrzeug 5 aber auch ein geeigneter Bewegungssensor (nicht dargestellt), wie ein Beschleunigungssensor, Gyrosensor, Trägheitssensor usw., vorgesehen sein, um die Bewegung des Fahrzeugs 5 im Raum zu erfassen.

Diese Zusammenhänge sind hinlänglich bekannt. Die Anordnung (Lage und Orientierung) und Zuordnung der Koordinatensysteme zueinander können aber auch anders sein, ohne die Erfindung zu beeinflussen.

Es ist bekannt, dass ein Punkt eines beliebigen Koordinatensystems als Punkt in einem anderen Koordinatensystem darstellbar ist, wenn der Bezug der Koordinatensysteme zueinander bekannt ist. Damit kann die Lage und Orientierung des

Kamerakoordinatensystems (x, y, z), bzw. des Bildkoordinatensystems, auch bezogen auf das Geokoordinatensystem (X, Y, Z) angegeben werden, beispielsweise durch hinreichend bekannte Koordinatentransformationen. Über die bekannten Koordinatensystembezüge kann jeder Punkt im Geokoordinatensystem (X, Y, Z), beispielsweise ein Objektpunkt G, eindeutig auf die Bildebene 4 der Kamera 3 abgebildet werden, beispielsweise auf den Bildpunkt p im Bildbereich $\Omega$, und der Bildpunkt p kann auch im Geokoordinatensystem (X, Y, Z) angegeben werden.

Die Lage und Orientierung der Kamera 3 und deren mit einer Optikeinheit 13 eingestelltes Sichtfeld 15 bestimmen in Verbindung mit der Form des Objekts 2 einen Aufnahmebereich 14, der in Fig. 1 schematisiert als Strich-Punkt-Linie angedeutet ist. Der Übersichtlichkeit halber ist das Objekt 2 in Fig. 1 als zweidimensionale Linie dargestellt. Es ist jedoch klar, dass der Aufnahmebereich 14 eine Fläche ist, die einer im Wesentlichen rechteckigen Projektion auf das Objekt 2 entspricht.

Die in der dargestellten Lage von der Kamera 3 gemachte Bildaufnahme 1 ist in Fig. 1 schematisch dargestellt, wobei ein Bildpunkt p im Bildbereich $\Omega$ aufgrund der optischen Eigenschaften des Kamerasystems einem Objektpunkt G im Aufnahmebereich 14 zugeordnet werden kann. Tatsächlich ist diese Zuordnung jedoch nicht immer eindeutig, da sich die Position des Fahrzeugs 5 und/oder der Kamera 3 während der für die Aufnahme erforderlichen Belichtungszeit T in Bewegungsrichtung des Fahrzeugs 5 weiterbewegen kann und/oder anderen translatorischen und/oder rotatorischen Bewegungen unterworfen ist, beispielsweise aufgrund von Vibrationen, Turbulenzen usw. Insbesondere eine Rotation um eine der Achsen (was im Zusammenhang mit Luftfahrzeugen üblicherweise als Rollen, Nicken und Gieren bezeichnet wird) des Fahrzeugkoordinatensystems kann eine sehr deutliche Verschiebung des Aufnahmebereichs 14 am Objekt 2 zur Folge haben. Dabei kann sich die Position des Objektpunkts G in der Bildaufnahme 1 (dies entspricht zum Beginn der Aufnahme dem Bildpunkt p in Fig.1) während der Belichtungszeit T verschieben (dies entspricht dem Bildpunkt p' in Fig.1). Anders ausgedrückt, kann ein Bildpunkt p im Bildbereich $\Omega$ während der Belichtung Licht von unterschiedlichen Objektpunkten G empfangen. Das führt zu einer Bildunschärfe im aufgenommenen Bild, was auch als Bewegungsunschärfe bezeichnet wird.

Die Bewegung des Objektpunktes G im Bildbereich $\Omega$ während der Belichtungszeit T (zwischen dem Beginn der Belichtung Ts und dem Ende der Belichtung $T_E$) ist in Fig.1 durch eine gestrichelte Linie in Form einer Bildtrajektorie BT dargestellt. Die Bildtrajektorie BT entsteht durch die Relativbewegung zwischen der Kamera 3 und dem Objekt 2 während der Belichtungszeit T der Bildaufnahme 1, wie oben erläutert.

Die Bildtrajektorie BT des Bildpunkts p während der Belichtungszeit T kann aufgrund der bekannten Relativbewegung zwischen der Kamera 3 und dem Objekt 2 als bekannt angesehen werden. Dazu kann die bekannte Änderung der Position, Orientierung und/oder Bewegung (Geschwindigkeit, Beschleunigung) der Kamera 3 während der Belichtungszeit T relativ zum Objekt 2 ausgewertet werden.

Die Geodaten des Objektpunkts G können beispielsweise aus verfügbaren oder proprietären Datenbanken erhalten werden. Die Änderung der Position, Orientierung und/oder Bewegung des Fahrzeugs 5, wie z.B. Flughöhe, Fluggeschwindigkeit, Flugrichtung usw., während der Belichtungszeit T können ebenfalls als bekannt vorausgesetzt werden, beispielsweise aus entsprechenden zugänglichen Fahrzeugdaten.

Es wird für die gegenständliche Erfindung vorausgesetzt, dass die Bildtrajektorie BT während der Belichtungszeit T bekannt ist oder ermittelt werden kann, was aufgrund der als bekannt vorausgesetzten Relativbewegung zwischen Kamera 3 und Objekt 2 während der Belichtungszeit T immer gegeben ist.

Bei genauer Kenntnis der Relativbewegung, bzw. des Verlaufs der Bildtrajektorie BT im Bildbereich $\Omega$, ist es möglich, für den entsprechenden Bildpunkt p (oder für einen definierten Bildausschnitt des Bildbereichs $\Omega$ bestehend aus mehreren Bildpunkten p) ein sehr wirkungsvolles Modell für die Abbildung der Bewegungsunschärfe zu erstellen, welches die tatsächlichen Verhältnisse sehr gut berücksichtigt. Dabei können nicht nur die translatorischen und rotatorischen Bewegungen (Geschwindigkeiten und Beschleunigungen) der Kamera 3 in allen Richtungen bezogen auf das Geokoordinatensystem berücksichtig werden, sondern es kann auch die Unschärfe berücksichtigt werden, die, etwa aufgrund von Bodenerhebungen wie Hochhäuser, Berge oder ähnlichem, durch die Entfernung eines Objektpunkts G von der Bildebene 4 entstehen kann. Aus dem Modell kann dann aus der unscharfen Bildaufnahme 1 das geschärfte Bild ermittelt werden, wie aus dem Stand der Technik bekannt ist.

Hierfür wird der Zusammenhang zwischen einem Bildpunkt p in der unscharfen Bildaufnahme 1 und dem zugeordneten Objektpunkt G des Objekts 2 mit einem mathematischen Modell modelliert. Das Modell bildet die Relativbewegung des Bildpunktes p zum Objektpunkt G, also die Bildtrajektorie BT, während der Belichtungszeit T ab. Anders ausgedrückt bildet das Modell ab, von welchen Objektpunkten G ein Bildpunkt p in der Bildaufnahme 1 während der Belichtungszeit T Licht empfängt, also von welchen Objektpunkten G ein Bildpunkt p in der Bildaufnahme 1 während der Belichtungszeit T belichtet wird. Das Modell enthält zusätzlich eine Dichtefunktion $\omega$, die einen Einfluss der Kamera auf die Belichtung während der Belichtungszeit beschreibt. Das Modell, als Funktion f ausgedrückt, kann damit allgemein in der Form $b(p) = f(\omega, I, H, T, p [,\eta])$ angeschrieben werden.

Das Modell der unscharfen Bildaufnahme 1 ergibt sich dabei natürlich aus der Summe aller einzelnen Bildpunkte p, wobei jeder Bildpunkt b(p) mit dem Modell modelliert werden kann.

Darin beschreibt b(p) das unscharfe Bild am Bildpunkt p, T die Belichtungszeit, I das zu rekonstruierende geschärfte Bild, der Transformationsoperator H, der in der Fachliteratur üblicherweise als Homographie bezeichnet wird, die Bewegung, die der Bildpunkt p während der Belichtungszeit T relativ zum Objekt 2 vollzogen hat, was der Bildtrajektorie BT entspricht. Optional (angedeutet durch die eckige Klammer) kann auch Rauschen, das während der Belichtung am Bildsensor 4 auftreten kann, berücksichtigt werden.

b(p) beschreibt beispielsweise die gesamte erfasste Lichtintensität am Bildpunkt p während der Belichtungszeit T. Die Lichtintensität kann als Strahlungsenergie aufgefasst werden, die senkrecht auf eine bestimmte Fläche in einer bestimmten Zeit auftrifft.

Die Dichtefunktion $\omega$ beschreibt den Einfluss des optischen Systems der Kamera 3 auf die an der Bildebene 4 der Kamera 3 eintreffende Lichtintensität. Die Dichtefunktion $\omega$ verändert damit die Lichtintensität, die vom Objekt 2 ausgeht, und die das Objekt 2 repräsentiert, und vom Bildsensor der Kamera 3 erfasst wird.

Der Transformationsoperator H beschreibt die Bewegung der Kamera 3, bzw. der Bildebene 4 der Kamera 3, relativ zum mit der Kamera 3 aufgenommenen Objekt 2, also die Relativbewegung eines Kamerakoordinatensystems (x, y, z), bzw. Bildkoordinatensystems (x, y), relativ zu einem Geokoordinatensystem (X, Y, Z). Der Transformationsoperator H ergibt sich damit aus der Relativbewegung zwischen der Kamera 3 und dem Objekt 2 und beschreibt die Bildtrajektorie BT.

Die Definition des Transformationsoperators H ist hinlänglich bekannt, beispielsweise aus den eingangs genannten Fachartikeln. Der Transformationsoperator H, wird nachfolgend anhand einer beispielhaften Ausgestaltung erläutert.

Der Transformationsoperator H enthält in dieser Ausgestaltung die bekannten intrinsischen und extrinsischen Parameter der Kamera 3. Die intrinsischen Parameter sind zumindest die Brennweite f und die Lage des Hauptpunktes h der Kamera 3. Der Hauptpunkt h ist der Schnittpunkt einer Normalen auf die Bildebene 4, die durch das optische Zentrum der Kamera 3 verläuft und entspricht üblicherweise dem Schnittpunkt der optischen Achse der Kamera 3 mit der Bildebene 4. Die Koordinaten $h_0$, $h_1$ des Hauptpunktes h im Bildkoordinatensystem beschreiben dann die Lage des Hauptpunktes h bezogen auf das Bildkoordinatensystem (x, y), beispielsweise in einer Ecke der Bildebene 4. Die extrinsischen Parameter beschreiben die Rotation und die Translation der Kamera 3 und damit die Lage und Orientierung des Kamerakoordinatensystems, bzw. Bildkoordinatensystem, bezogen auf das Geokoordinatensystem. Die extrinsischen Parameter können aber noch weitere bekannte Einflüsse der Kamera auf das Bild, beispielswiese eine Verzeichnung, Vignettierung, Aberration, berücksichtigen.

Die bekannten intrinsischen Parameter der Kamera 3 sind beispielsweise in der Matrix $C = \begin{bmatrix} f & 0 & h_0 \\ 0 & f & h_1 \\ 0 & 0 & 1 \end{bmatrix}$ zusammengefasst.

Die Rotation der Kamera 3 wird mit einer Rotationsmatrix R(t) beschrieben und die Translation mit einem Translationsvektor S(t), die beide zeitabhängig sind.

Der Transformationsoperator H kann damit wie folgt ausgedrückt werden.

$$H(t, p) = PC\left(R(t) + \frac{1}{d}S(t)n^T\right)C^{-1}\left(P^T p + e_2\right)$$

Der Transformationsoperator H beschreibt die Position des Bildpunktes p im Bildkoordinatensystem zu jedem Zeitpunkt t während der Belichtung, also zwischen Belichtungsstart $T_S$ und Belichtungsende $T_E$. Die Szenentiefe d ist der Normalabstand des Bildpunktes p von der Bildebene 4 zum Objektpunkt G und kann ebenso aus den bekannten Geodaten und Bewegungsdaten des Fahrzeugs 5 ermittelt werden. Die Matrix $P = \begin{pmatrix} 1 & 0 & 0 \\ 0 & 1 & 0 \end{pmatrix}$ und der Einheits-vektor $e_2 = \begin{pmatrix} 0 \\ 0 \\ 1 \end{pmatrix}$ werden zur Abbildung auf die zweidimensionale Bildebene 4 benötigt. Der Vektor n bezeichnet dabei den Einheitsnormalenvektor, der orthogonal zur Bildebene 4 der Kamera 3 gerichtet ist.

Die Orientierung der Kamera 3, bzw. des Kamerakoordinatensystems, zum Zeitpunkt t kann durch die drei Raumwinkel $\theta_t = \begin{pmatrix} \theta_{t,X} \\ \theta_{t,Y} \\ \theta_{t,Z} \end{pmatrix}$ beschrieben werden, die die relative Änderung bezogen auf ein bestimmtes Referenz-Koordinatensystem, beispielsweise im Fahrzeugkoordinatensystem, beschreiben. Das Referenz-Koordinatensystem entspricht typischerweise der bekannten Orientierung der Kamera 3, oder der Bildebene 4, zu einem bestimmten Zeitpunkt während der Belichtung, etwa die Orientierung zum Startzeitpunkt der Belichtung $T_S$. θ beschreibt dann die Änderung der Orientierung zu dieser Referenz für jeden Zeitpunkt t während der Belichtung. Die Rotationsmatrix R(t) kann durch $R(t) = e^{(\Theta t)}$ mit $\Theta_t = \begin{pmatrix} 0 & -\theta_{t,Z} & \theta_{t,Y} \\ \theta_{t,Z} & 0 & -\theta_{t,X} \\ -\theta_{t,y} & \theta_{t,X} & 0 \end{pmatrix}$ ausgedrückt werden.

Der Translationsvektor S(t) beschreibt die Position der Kamera 3, bzw. des Kamerakoordinatensystems, ebenfalls bezogen auf das Referenz-Koordinatensystem.

Der Transformationsoperator H beschreibt damit den zeitlichen Verlauf während der Belichtungszeit T (zwischen dem Startzeitpunkt der Belichtung Ts und dem Endzeitpunkt der Belichtung $T_E$) der Abbildung eines Objektpunktes G im dreidimensionalen Geokoordinatensystem auf das zweidimensionalen Bildkoordinatensystem (x,y) der Bildebene 4. Oder bezogen auf einen Bildpunkt p, die Bewegung des Bildpunktes p während der Belichtungszeit T relativ zum Objekt 2, also die Bildtrajektorie BT.

Ein bekanntes Modell der unscharfen Bildaufnahme 1 kann in der Form

$$b(p) = \int_{T_S}^{T_E} \omega(\tau) l\big(H(\tau, p)\big) d\tau \big[+\eta(p)\big]$$

angeschrieben werden, wobei natürlich auch andere mathematischen Modellierungen (andere Funktionen f) denkbar sind. $\eta$ bezeichnet optional (angedeutet durch die eckige Klammer) berücksichtigtes Rauschen, das während der Belichtung am Bildsensor 4 auftreten kann. Das Rauschen wird oftmals als weißes Rauschen angenommen und als Normalverteilung oder Gaußverteilung modelliert.

Man erkennt, dass in diesem bekannten Modell die Dichtefunktion $\omega$ als in der Bildebene 4 konstant angenommen wird, sich also in der Bildebene 4 von Bildpunkt zu Bildpunkt nicht ändert. Die Dichtefunktion $\omega$ ist damit eine bildpunktkonstante Dichtefunktion.

Dies spiegelt in den meisten Fällen jedoch nicht die realen Gegebenheiten wider. So kann beispielsweise die Verschlussvorrichtung (Shutter) der Kamera 3, sei diese mechanisch, wie z.B. ein Zentralverschluss, oder elektronisch, wie z.B. ein Rolling Shutter (zeilen- oder spaltenweises Auslesen der Pixel) oder ein Global Shutter (gleichzeitiges Auslesen aller Pixel zur selben Zeit), einen unterschiedlichen Verlauf der Dichtefunktion $\omega$ im Bild erzeugen. Insbesondere bei mechanischen Verschlussvorrichtungen kann der Einfluss der Verschlussbewegung beim Öffnen und/oder Schließen des Verschlusses die Belichtung der einzelnen Pixel des Bildsensors der Kamera 3 während der Belichtungszeit T beeinflussen. Die mechanische Verschlussvorrichtung hat eine endliche Öffnungs- und/oder Schließzeit und einen zeitlichen Verlauf der Öffnungs- und/oder Schließbewegung, sodass es eine gewisse Zeit dauert, bis der Verschluss tatsächlich vollständig geöffnet und/oder geschlossen ist. Das beeinflusst die auf den Bildsensor eintreffende Lichtintensität. Aber auch andere Vorrichtungen der optischen Einheit der Kamera, wie z.B. ein Center Filter, ein Farbfilter, ein Objektiv, eine Blende, der Bildsensor selbst, etc., können in der Bildebene 4 bildpunktabhängige Auswirkung auf die Dichtefunktion $\omega$ haben. Solche Vorrichtungen können die Lichtintensität des an einem Bildpunkt p eintreffenden Lichtes und/oder die vom Bildsensor ausgelesene Lichtintensität beeinflussen.

Der Einfluss des Verschlusses kann am Beispiel eines mechanischen Zentralverschlusses einfach nachvollzogen werden. Der Zentralverschluss öffnet von zentral innen nach außen. Während der Öffnung wird die Lichtmenge, die am Bildsensor eintrifft erhöht. Der zeitliche Verlauf beeinflusst damit die Belichtung. Bei Schließen stellt sich der umgekehrte Effekt ein. Solche Effekte werden sich auch bei einem Schlitzverschluss oder anderen Verschlussvorrichtungen ergeben.

Ähnliche Effekte können sich durch elektronische Verschlussvorrichtungen, optische Filter, durch das Objektiv oder eine Blende ergeben. Auch solche Komponenten der optischen Einheit können die Dichtefunktion beeinflussen.

Es wurde erkannt, dass diese Effekte bildpunktabhängig sind und die Belichtung über die ganze Bildebene 4, bzw. die einzelnen Bildpunkte p im Bildbereich $\Omega$, folglich nicht gleichmäßig beeinflussen.

Um solche Einflüsse in der Rekonstruktion des scharfen Bildes I zu berücksichtigen wird die Dichtefunktion $\omega$ nicht wie bisher nur zeitlich abhängig und bildpunktkonstant modelliert, sondern erfindungsgemäß auch in der Bildebene 4 bildpunktabhängig gemacht. Die Bildpunktabhängigkeit bezieht sich dabei auf die Lage eines Bildpunktes p im Bildbereich $\Omega$ oder auf die Lage eines Bildabschnittes bestehend aus einer Mehrzahl von Bildpunkten p im Bildbereich. Die Dichtefunktion $\omega$ bildet damit eine sich aus der Ausführung der Kamera 3 ergebende bildpunktabhängige und zeitabhängige Beeinflussung der Belichtung verschiedener Bildpunkte p während der Belichtungszeit T ab.

Die obige Modellierung des unscharfen Bildes ändert sich damit beispielsweise zu

$$b(p) = \int_{T_S}^{T_E} \omega(p,\tau) l\big(H(\tau,p)\big) d\tau \big[+\eta(p)\big].$$

Die Dichtefunktion $\omega$ ist damit nicht mehr konstant in der Bildebene 4, sondern ist für jeden Bildpunkt p in der Bildebene 4 definiert und ist damit bildpunktabhängig. Ts bezeichnet den Startzeitpunkt der Belichtung und $T_E$ den Endzeitpunkt der Belichtung.

Die Dichtefunktion $\omega$ kann aber für vorgegebene Bildabschnitte des Bildbereichs $\Omega$, wobei ein Bildabschnitt ein Teilbereich des Bildbereichs $\Omega$ ist, bildpunktkonstant sein. Dabei nimmt man an, dass die Dichtefunktion $\omega$ für jeden Bildpunkt eines solchen Bildabschnitts nur zeitabhängig ist, die Dichtefunktion $\omega$ aber in den einzelnen Bildabschnitten unterschiedlich sein kann, womit die Dichtefunktion $\omega$ auch hierbei bildpunktabhängig ist.

Das Ziel ist es nun das unbekannte, geschärfte Bild I aus dem Modell der unscharfen Bildaufnahme 1 zu ermitteln. Hierfür wird das Modell zuerst diskretisiert, weil der Bildsensor ja aus einer Menge $\Omega_h$ von diskreten Pixeln besteht.

Ist der Bildbereich $\Omega$ der Kamera 3 gegeben durch die Anzahl H der Pixel in der Höhe des Bildsensors und die Anzahl W der Pixel in der Breite des Bildsensors, dann kann der diskretisierte Bildbereich $\Omega_h$ durch die Menge der Pixel

$$\left\{\Omega_{i,j}\right\}_{i=0,j=0}^{H-1,W-1}$$ mit $\Omega_{i,j} = [i, i+1] \otimes [j, j+1]$ ausgedrückt werden. Das diskretisierte unscharfe Bild B und das diskretisierte scharfe Bild L können dann durch

$B[i,j]=b(p_{i,j})$ und $L[i, j] = l(p_{i,j})$ ausgedrückt werden, wobei $p_{i,j}$ die geometrischen Mittelpunkte der Pixel $\Omega_{i,j}$ definieren. In weiterer Folge wird nur mehr kurz B und L verwendet, die das ganze disktrete Bild beschreiben, also jeweils die Menge der Pixel.

Durch Anwendung einer bekannten numerischen Integrationsformel für das Modell

$$b(p) = \int_{T_S}^{T_E} \omega(p,\tau) l\big(H(\tau,p)\big) d\tau$$ , wie der summierten Mittelpunktregel oder der summierten Trapezregel, und den obigen Diskretisierungen erhält man als diskretisiertes Modell des unscharfen Bildes beispielsweise ein lineares Gleichungssystem

$$B = \sum_{k=0}^{M-1} W_k \circ H_k L ,$$

wobei M die Anzahl der Teilintervalle der numerischen Integrationsformel für den Integrationsbereich $[T_S, T_E]$ bezeichnet. Der mathematische Operator $\circ$ ist der elementweise Multiplikationsoperator.

Der Transformationsoperator H bildet einen Bildpunkt p im unscharfe Bild B auf eine bestimmte Position im scharfen Bild I ab. Die Veränderung dieser Position im scharfen Bild I kann aber auch im Subpixelbereich liegen. Als Subpixelbereich wird eine Auflösung innerhalb eines Pixels $\Omega_{i,j}$ verstanden. Das ist für das obige kontinuierliche Modell natürlich kein Problem, da I überall ausgewertet werden kann. Sobald man jedoch in Pixel $\Omega_{i,j}$ diskretisiert, also die diskreten Bilder B und L verwendet und die Gleichung dafür aufstellen möchte, ist es daher vorteilhaft, wenn das Auswerten im Subpixelbereich auch für das diskrete Bild L möglich ist. Dazu kann zur Diskretisierung in den Subpixelbereich im diskreten Bild L üblicherweise eine geeignete Interpolation, wie eine bilineare Interpolation, angewandt werden. In diesem Fall ergibt sich der diskrete Transformationsoperator $H_k$ nicht nur aus der numerischen Integrationsformel, sondern enthält auch diese Diskretisierung des scharfen Bildes L in den Supixelbereich.

$W_k$ und $H_k$ sind somit die diskretisierte Dichtefunktion und der diskretisierte Transformationsoperator, die sich aus der Anwendung der numerischen Integrationsformel, und gegebenenfalls aus einer Diskretisierung des scharfen Bildes L in den Subpixelbereich (beispielsweise mittels bekannter bilinearer Interpolation), ergeben.

Mit dem Blur Operator $A = \sum_{k=0}^{M-1} W_k \circ H_k$ erhält man die diskrete Darstellung zur Modellierung der Unschärfe im Bild als lineares Gleichungssystem der Form

$$B = AL \big[+\eta\big],$$

wobei $\eta$ wieder das optionale Rauschen am jeweiligen Pixel beschreibt.

Für solche lineare Gleichungssysteme, mit oder ohne Rauschen, gibt es eine Fülle von bekannten direkten oder iterativen Lösungsverfahren, die angewandt werden können, um daraus L (also das scharfe Bild) zu ermitteln. Beispiele für Lösungsverfahren sind Verfahren die auf dem bekannten Richardson-Lucy Algorithmus oder auf bekannten Total-Variation (TV) Regularisation Algorithmen beruhen.

Das Richardson-Lucy-Verfahren berechnet eine Maximum-Likelihood Schätzung auf Basis einer zugrundeliegenden Poisson-Verteilung als Wahrscheinlichkeitsverteilung. Das sich ergebende iterative Verfahren ist gegeben durch

$$L^{k+1} = L^k \circ A^T \left( \frac{B}{AL^k} \right)$$

mit $L^0 = B$. $A^T$ bezeichnet den adjungierten Blur Operator A. Das iterative Verfahren wird solange ausgeführt, bis die relative Änderung aufeinanderfolgender Schätzungen (allgemein mit Index k, k+1) des geschärften Bildes L eine vorgegebene Grenze ε unterschreitet, was mathematisch in der Form $\frac{\left\| L^{k+1} - L^k \right\|_2}{\left\| L^k \right\|_2} < \varepsilon$ ausgedrückt werden kann, wobei $\| \|_2$ die euklidische Norm beschreibt. $L^{k+1}$ zum Zeitpunkt des Abbruchs der Iteration stellt dann das gesuchte geschärfte Bild L dar.

Um den Einfluss von optionalem (weißem) Rauschen in der Bestimmung des geschärften Bildes L zu reduzieren, kann zusätzlich eine TV-Regularisierung in das Verfahren einfließen. Die Iterationsvorschrift lautet dann

$$L^{k+1} = L^k \circ A^T \left( \frac{B}{AL^k} \right) \circ \frac{1}{1 - \lambda div \left( \frac{\nabla L^k}{|\nabla L^k|} \right)}$$ mit einem wählbaren oder vorgegebenen Regularisierungsparameter λ.

Im Falle von räumlich konstanter Bewegungsunschärfe in der Bildaufnahme 1, beispielsweise bei vernachlässigbaren Kamerarotationen während der Belichtungszeit T, und bildpunktkonstanter Dichtefunktion ω, reduziert sich das obige lineare Gleichungssystem auf eine Faltungsoperation $B = A*L + \eta$. In diesem Fall beschreibt jeder Bildpunkt p dieselbe Bildtrajektorie BT in der Bildaufnahme 1. Der Blur Operator A kann in diesem Fall als Blur Kernel bezeichnet werden und beschreibt die konstante Bildunschärfe, die sich von der oben beschriebenen bildpunktabhängigen Bildunschärfe unterscheidet. Ein solches Gleichungssystem lässt sich wesentlich effizienter lösen, als das obige Gleichungssystem mit räumlich variierender Bildunschärfe.

Die Iterationsvorschrift für das obige Richardson-Lucy-Verfahren vereinfacht sich dabei zu

$$L^{k+1} = L^k \circ \left( A^T * \left( \frac{B}{A*L^k} \right) \right) \text{ oder } L^{k+1} = L^k \circ \left( A^T * \left( \frac{B}{A*L^k} \right) \right) \circ \frac{1}{1 - \lambda div \left( \frac{\nabla L^k}{|\nabla L^k|} \right)} .$$

Das kann erfindungsgemäß ausgenutzt werden, indem man von konstanter (im Sinne von gleichartiger) Bewegungsunschärfe und bildpunktkonstanter Dichtefunktion ω in bestimmten Bildabschnitten der Bildaufnahme 1 ausgeht. Dabei wird der Bildbereich $\Omega_h$ in überlappende oder nicht-überlappende Bildabschnitte $\Omega_d$ aufgeteilt, mit $\Omega_d \subset \Omega_h$ für d=0, ..., $N_D$-1. Damit ergeben sich für das gesamte Bild $N_D$ lineare, lokale Gleichungssysteme der Form $B^d = K^d * L^d + \eta^d$ oder $B^d = A^d L^d + \eta^d$, die zu einem lineare Gleichungssystem zusammengefasst werden können oder einzeln gelöst werden können. Nach dem Lösen der lokalen Gleichungssysteme kann die Gesamtlösung L aus $L^d$, d=0, ..., $N_D$-1 berechnet werden. Im Falle von Überlappungen der Bildabschnitte $\Omega_d$ kann durch ein geeignetes Blending ein gleichmäßigerer Übergang zwischen den einzelnen Bildabschnitten $\Omega_d$ erzielt werden.

Nachdem sich die bildpunktabhängige Dichtefunktion ω(p,t) aus der Ausführung der Kamera 3 ableitet, insbesondere aus der Ausführung der Verschlussvorrichtung, aber auch aus anderen optischen Einheiten der Kamera 3, kann diese für eine bestimmte Kamera 3 als bekannt vorausgesetzt werden.

Der Vorteil des oben beschriebenen erfindungsgemäßen Vorgehens zur Bestimmung des geschärften Bildes L liegt somit auch darin, dass die bildpunktabhängige Dichtefunktion ω(p,t) bekannt ist und daher nicht erst im Zuge der Ermittlung des geschärften Bildes L mitermittelt werden muss, beispielsweise aus Bilddaten.

Das Verfahren zur Bildkorrektur wird auf einer Recheneinheit (nicht dargestellt), beispielsweise ein Computer, einer mikroprozessorbasierten Hardware usw., ausgeführt. In diesem Fall ist das Verfahren in Form von Programmanweisungen (wie ein Computerprogramm) implementiert, dass auf der Recheneinheit ausgeführt wird. Die Recheneinheit erhält dazu auch erforderlich Informationen, wie Daten zur Bewegung des Fahrzeugs 5 und/oder der Kamera 3 während der Belichtung. Das Verfahren könnte aber auch auf einem integrierten Schaltkreis, wie einem Field Programmable Gate Array (FPGA) oder einer anwendungsspezifischen integrierten Schaltung (ASIC), als Recheneinheit implementiert sein.

Zur Bildkorrektur der Bewegungsunschärfe in einem mit einer Kamera 3 aufgenommenen Bild, wobei zwischen Kamera 3 und aufgenommenen Objekt 2 während der Belichtung eine Relativbewegung stattfindet, erhält die Recheneinheit Daten zur Relativbewegung während der Belichtung, beispielsweise Bewegungsdaten von einem Fahrzeug 5 im Geokoordinatensystem und/oder Daten zur Bewegung einer Kamera 3 relativ zu einem Fahrzugkoordinatensystem, beispielsweise von einem Bewegungssensor 8. Mit diesen Daten zur Relativbewegung und der für die Kamera 3 bekannte Dichtefunktion $\omega(p,t)$ kann wie oben beschrieben ein lineares Gleichungssystem, oder mehrere lineare, lokale Gleichungssysteme, ermittelt werden, aus dem, oder aus denen, das geschärfte Bild wie oben beschrieben ermittelt werden kann. Die Bildkorrektur findet vorzugsweise offline statt, also nachdem ein Bild aufgenommen wurde, kann aber auch online, unmittelbar nach der Aufnahme erfolgen.

Nachfolgend wird beispielhaft eine Möglichkeit zur Bestimmung der bildpunktabhängigen Dichtefunktion $\omega(p,t)$ beschrieben. Die Bestimmung der Dichtefunktion $\omega(p,t)$ erfolgt ebenso vorzugsweise auf einer Recheneinheit. Die Dichtefunktion $\omega(p,t)$ kann vorab für eine bestimmte Kamera bestimmt werden und dann in geeigneter Weise für die Bildkorrektur gespeichert werden.

Zur Bestimmung der Dichtefunktion $\omega$ wird angenommen, dass während der Belichtung keine Relativbewegung zwischen Kamera 3 und Objekt 2 vorhanden ist, beispielsweise indem die Kamera 3 auf einem starren Versuchsaufbau montiert ist und fix auf ein aufzunehmendes Objekt 2 gerichtet ist. Die Kamera 3 ist hierzu auf eine möglichst homogene helle Fläche als Objekt 2 gerichtet, sodass bei idealen Verhältnissen an jedem Bildpunkt p während der Belichtung die gleiche Lichtintensität eintreffen sollte.

In diesem Beispiel wird eine Kamera 3 mit einer mechanischen Verschlussvorrichtung hinter der Blende der Kamera 3 verwendet. Die Kamera 3 hat in diesem Ausführungsbeispiel eine elektronische Belichtungssteuerung, d.h., dass der Zeitpunkt und die Zeitspanne, während der die Lichtdetektoren des Bildsensors aktiv sind elektronisch gesteuert werden kann. Das ermöglicht es, die Belichtungszeit T unabhängig von den zeitlichen Limitierungen der mechanischen Verschlussvorrichtung zu machen. Damit sind insbesondere wesentlich kürzere Belichtungszeiten T möglich, als es allein mit einer mechanischen Verschlussvorrichtung möglich wäre. Das ermöglicht es aber auch, die Verschlussvorrichtung vor einer Bildaufnahme zu öffnen und die eigentliche Belichtung durch die elektronische Belichtungssteuerung zu steuern. Damit wird die Bildaufnahme unabhängig von der Öffnung der Verschlussvorrichtung. Beispielsweise könnte die Belichtungszeit T damit auf einen Teil der Schließbewegung der Verschlussvorrichtung beschränkt werden.

Die bildpunktabhängige Dichtefunktion $\omega(p,t)$ soll die Öffnungs- oder Schließbewegung der mechanischen Verschlussvorrichtung, beispielsweise ein Zentralverschluss wie eine Irisblende, und damit deren Einfluss auf die Belichtung abbilden. Die Positionsabhängigkeit kann sich dabei aus einer nicht ganz symmetrischen Öffnungs- und/oder Verschlussbewegung der Verschlussvorrichtung ergeben. Dieser Effekt kann auch von einer eingestellten Blende abhängig sein, sodass die Positionsabhängigkeit auch von anderen Kameraparametern, wie der eingestellten Blende, abhängig sein kann. Es werden zur Bestimmung der Dichtefunktion $\omega(p,t)$ Messungen der am Bildsensor der Kamera 3 auftreffenden Lichtmenge bei unterschiedlichen Belichtungseinstellungen durchgeführt.

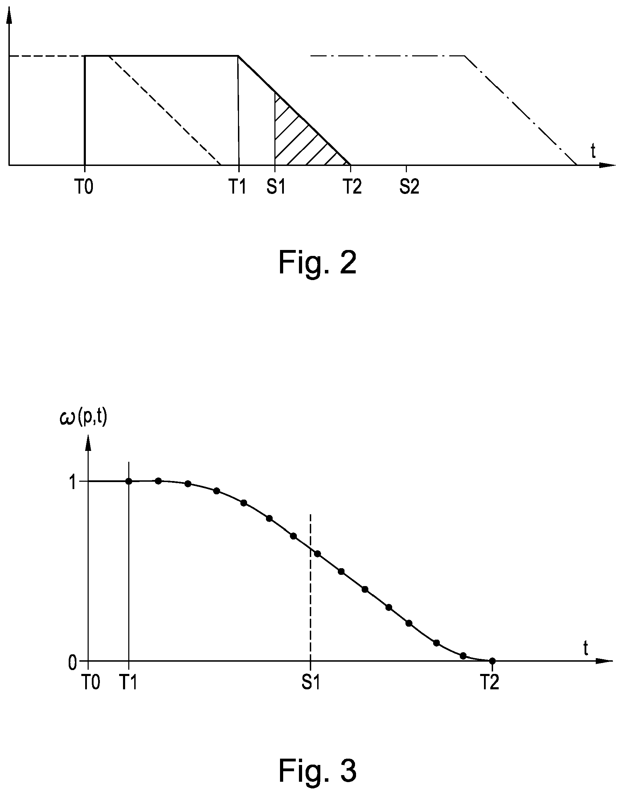

Das wird beispielhaft mit Bezugnahme auf Fig.2 erläutert, die eine idealisierte Verschlussbewegung einer mechanischen Verschlussvorrichtung darstellt. Der Zeitpunkt T0 bezeichnet den Verschlussstartzeitpunkt, also den Zeitpunkt des Verschlusskommandos zum Schließen der Verschlussvorrichtung. T1 bezeichnet die bekannte mechanische Verschlussverzögerungszeit, und (T1-T0) also die Zeitspanne zwischen dem Verschlussstartzeitpunkt und dem Zeitpunkt des Beginns der Verschlussbewegung. Der Zeitpunkt T2 bezeichnet den Zeitpunkt, an dem die Verschlussvorrichtung zur Gänze geschlossen ist. Die Zeitpunkte T0, T1, T2 sind dabei festgelegte und bekannte Parameter der Verschlussvorrichtung, die allerdings innerhalb üblicher Toleranzen variieren können. Auch Alterungseffekte können Einfluss auf diese Zeitpunkte haben. S1 bezeichnet den Belichtungsbeginn am Bildsensor und S2 das Belichtungsende am Bildsensor, die an der Kamera 3 beispielsweise mit der elektronischen Belichtungssteuerung eingestellt werden können. Die strichlierte Fläche repräsentiert die tatsächliche Belichtung am Bildsensor und definiert damit die Lichtmenge, die am Bildsensor eintrifft während der Belichtungszeit T. Es wird davon ausgegangen, dass die Verschlussvorrichtung vor dem Zeitpunkt T0 vollständig geöffnet ist.

Wird nun in einer Serienaufnahme die Belichtungszeit T variiert, beispielsweise indem der Zeitpunkt T0 variiert wird, von einem Zeitpunkt, an dem die Verschlussvorrichtung vor dem Belichtungsbeginn S1 am Bildsensor 4 geschlossen ist (in Fig.2 gestrichelt angedeutet) und einem Zeitpunkt, an dem die Verschlussvorrichtung während der Belichtung vollständig geöffnet ist (in Fig.2 strichpunktiert angedeutet), erhält man einen Verlauf der am Bildsensor, konkret an den Bildpunkten p des Bildsensors, eintreffenden Lichtmenge, in Abhängigkeit von der tatsächlichen Belichtungszeit T, die durch (T2-S1) ausgedrückt werden kann, wobei die Belichtungszeit zwischen 0 und (S2-S1) variieren kann. Abhängig von einer Blende kann die effektive Belichtungszeit zusätzlich reduziert werden, beispielsweise für den Fall, dass die Blendenöffnung kleiner ist als die Verschlussöffnung. Die Variation der Belichtung kann natürlich auch durchgeführt werden, indem man den Zeitpunkt T0 (und damit auch T1, T2) unverändert lässt und den Belichtungsbeginn S1 bei gleichbleibender Zeitdauer (S2-S1) variiert.

Um aus dieser Serienaufnahme ein Modell der Verschlussbewegung der Verschlussvorrichtung zu erhalten kann wie folgt vorgegangen werden.

Nachdem keine Relativbewegung zwischen Kamera 3 und Objekt 2 gegeben ist, reduziert sich der obige Transformationsoperator H auf die Identitätsabbildung und es folgt $H(t,p)=p$ mit $p \in \Omega$. Das obige Modell des unscharfen Bildes kann damit umgeschrieben werden zu $b(p,t) = l(p) \int_{t}^{T_E} \omega(p,\tau)d\tau$ , wobei eine neue Zeitvariable t eingeführt wird, die den Belichtungsbeginn S1 (Startzeitpunkt Ts der Belichtung) definiert. b(p,t) beschreibt das dabei aufgenommene Bild, hier der homogenen hellen Fläche als Objekt 2. Wie schon erwähnt wird davon ausgegangen, dass der Belichtungsbeginn S1 elektronisch variiert wird. Die partielle Ableitung dieses Modells nach t liefert dann $\omega(p,t) = -\partial_t b(p,t)(l(p))^{-1}$.

Aufgrund dieser Darstellung der Dichtefunktion $\omega(p,t)$ kann eine Approximation mit Hilfe einer Serienaufnahme $\left\{b\left(p,t_i\right)\right\}_{i=0}^{N_t-1}$ bestehend aus $N_t$ einzelnen Bildaufnahmen mit unterschiedlichen Startzeitpunkten Ts der Belichtung $\left\{t_i\right\}_{i=0}^{N_t-1}$ , bestimmt werden.

Durch Auswerten von $-\partial_t b(p,t)(l(p))^{-1}$ , beispielsweise mit Vorwärts-, Rückwärts-oder zentralem Differenzenquotienten, erhält man in einem bestimmten Bildpunkt p eine endliche Anzahl an Beobachtungen $\left\{\left(t_i, \omega_i^p\right)\right\}_{i=0}^{N_t-1}$ , die den zeitlichen Verlauf der Dichtefunktion $\omega(p,t)$ an diesem Bildpunkt p beschreiben.

Diese Beobachtungen können als Dichtefunktion $\omega(p,t)$ gespeichert werden und zwischen den Zeitpunkten der Beobachtungen kann interpoliert werden. Die Beobachtungen $\left\{\left(t_i, \omega_i^p\right)\right\}_{i=0}^{N_t-1}$ sind in Fig.3 beispielhaft als Punkte dargestellt.

Es kann aber auch anhand der Beobachtungen $\left\{\left(t_i, \omega_i^p\right)\right\}_{i=0}^{N_t-1}$ und einer bekannten Kurvenapproximation eine mathematische Funktion ermittelt werden, die die Beobachtungen möglichst gut beschreibt. Damit kann die Dichtefunktion $\omega(p,t)$ für den Bildpunkt p auch als mathematische Funktion in Abhängigkeit der Zeit gespeichert werden. Das kann für jeden Bildpunkt p gemacht werden. Eine Kurve, die die Beobachtungen approximiert ist ebenfalls in Fig.3 dargestellt. Mit der ermittelten Kurve hat man zu jedem Zeitpunkt t einen Wert der Dichtefunktion $m(p,t)$.

Derartige Kurvenapproximationen sind hinlänglich bekannt und werden üblicherweise mittels Optimierung gelöst. Dazu wird eine mathematische Funktion $\omega_{\alpha_p}(p,t)$ mit Funktionsparameter $\alpha_p$ gewählt, die an sich beliebig sein kann, beispielsweise ein Polynom eines bestimmten Grades oder ein stückweise definiertes Polynom eines bestimmten Grades und mit Polynomkoeffizienten als Funktionsparameter $\alpha_p$. Die Funktionsparameter $\alpha_p$ lassen sich beispielsweise aus einem bekannten Minimierungsproblem bestimmen, das allgemein in der Form

$$\alpha_p := \arg\min_{\alpha_p} \sum_{i=0}^{N_t-1} \rho\left(\beta_i\left(\omega_{\alpha_p}(p,t_i) - \omega_i^p\right)\right) + \gamma(\alpha_p)$$

angeschrieben werden kann. Darin bezeichnen $\beta_i$ optionale, vorgegebene oder wählbare Gewichte, $\gamma$ einen optionalen, vorgegebenen oder gewählten Regularisierungsterm, um die Funktionsparameter $\alpha_p$ bedarfsweise in eine gewisse Richtung zu lenken, und $\rho$ eine beliebige Vektornorm, wie eine Euklidische Norm oder Summennorm. Für derartige Minimierungsprobleme gibt es hinlängliche bekannte iterative Lösungsalgorithmen, die definieren, wie die gesuchten Funktionsparameter $\alpha_p$ in jedem Iterationsschritt variiert werden, und wann die Iteration beendet wird. Bekannte Lösungsalgorithmen sind beispielsweise das Gradientenverfahren oder Gauß-Newton-Verfahren.

Wird die Optimierung nur für einen Bildpunkt p angesetzt, spricht auch von lokaler Optimierung.

Das wird im Folgenden beispielhaft am Beispiel eines Polynoms n-ten Grades als mathematische Funktion $\omega_{\alpha_p}$ $(p,t)$ beschrieben, $\omega_{\alpha_p}(p,t) = \sum_{j=0}^{n} \alpha_{p,j} t^j$ . Werden die Euklidische Norm, die Gewichte $\beta_i=1$ und $\gamma=0$ gewählt, ergibt

sich das Regressionsmodell $\alpha_p := \arg\min_{\alpha_p} \sum_{i=0}^{N_t-1} \left\| \left( \omega_{\alpha_p}(p,t_i) - \omega_i^p \right) \right\|_2^2$ zur Bestimmung der Parameter $\alpha_p$. Die Lösung dieses Optimierungsproblems kann direkt angegeben werden und ist gegeben durch $\alpha_p = (G^T G)^{-1} G^T \omega^p$ mit

$$\alpha_p = \begin{pmatrix} \alpha_0 \\ \alpha_1 \\ \vdots \\ \alpha_n \end{pmatrix}, \ \omega^p = \begin{pmatrix} \omega_0^p \\ \omega_1^p \\ \vdots \\ \omega_{N_t-1}^p \end{pmatrix}, \ G = \begin{pmatrix} 1 & t_0 & t_0^2 & \cdots & t_0^n \\ 1 & t_1 & t_1^2 & \cdots & t_1^n \\ \vdots & \vdots & \vdots & \ddots & \vdots \\ 1 & t_{N_t-1} & t_{N_t-1}^2 & \cdots & t_{N_t-1}^n \end{pmatrix}.$$

Eine mathematische Funktion $\omega_{\alpha_p}(p, t)$ kann für jeden Bildpunkt p ermittelt werden, wobei sich für verschiedene Bildpunkte p die Funktionsparameter $\alpha_p$ unterscheiden werden. Es ist aber nicht erforderlich, dass die mathematische Funktion $\omega\alpha_p(p, t)$ für jeden Bildpunkt p unterschiedlich ist. Es kann auch nur für eine Anzahl von Bildpunkten p eine mathematische Funktion $\omega_{\alpha_p}(p,t)$ bestimmt werden, wobei dazwischen, also für andere Bildpunkte p, interpoliert werden kann.

Die Menge der derart ermittelten Funktionen $\omega_{\alpha_p}(p,t)$ kann für geeignet gewählte Bildpunkte p als Approximation für die globale Dichtefunktion $\omega(p,t)$ verwendet werden.

Es ist auch denkbar, dass man für eine Anzahl $N_p$ verschiedener Bildpunkte p des Bildbereichs $\Omega$ die Anzahl $N_t$ an Beobachtungen erstellt. Dann könnte man aus diesen Beobachtungen auch ein globales Modell für die Dichtefunktion $\omega(p,t)$ für den gesamten Bildbereich $\Omega$ erstellen, weil die Annahme getroffen werden kann, dass sich die Dichtefunktion $\omega(p,t)$ im Normalfall im Bildbereich nur langsam ändern wird. Die approximierte Dichtefunktion $\omega_{\alpha_p}(p,t)$ wäre dann eine dreidimensionale Funktion definiert für jeden Bildpunkt p und Zeitpunkt t. In diesem Fall spricht man auch von globaler Optimierung.

Das Optimierungsproblem für eine globale Optimierung kann mit globalen Funktionsparametern $\alpha$ allgemein in der Form

$$\alpha := \arg\min_{\alpha} \sum_{j=0}^{N_p-1} \sum_{i=0}^{N_t-1} \rho\left( \beta_{ji}\left( \omega_\alpha(p_j, t_i) - \omega_{ji} \right) \right) + \gamma(\alpha)$$

angeschrieben werden, das mit geeigneten Methoden gelöst werden kann.

Die Dichtefunktion $\omega(p,t)$ wird vorzugsweise auf den Bereich [0,1] normiert.

Die derart ermittelte Dichtefunktion $\omega(p,t)$ bildet den Einfluss des Schließvorganges der Verschlussvorrichtung auf die Belichtung des Bildsensors 4 ab.

Je nach Ausführung der Kamera 3 bei der Ermittlung der Dichtefunktion $\omega(p,t)$ werden darin aber andere Einflüsse des optischen Systems der Kamera 3, wie der Einfluss einer Blende, eines Filters usw., ebenso berücksichtigt. Beispielsweise kann die Dichtefunktion $\omega(p,t)$ auf diese Weise für verschiedene Blendeneinstellungen ermittelt werden.

Wenn die Belichtung über die Verschlussbewegung gesteuert wird, dann kann die Dichtefunktion $\omega(p,t)$ wie ermittelt verwendet werden. Kommt eine elektronische Belichtungssteuerung zum Einsatz kann anhand des Startzeitpunkts S1 der Belichtung (in Fig.3 angedeutet), der auf den Zeitpunkt T0 oder T1 bezogen sein kann, der Teil der Dichtefunktion $\omega(p,t)$ verwendet werden, der für den Belichtungsvorgang maßgebend ist, also der Teil zwischen T2 und S1.

Auf diese Weise kann auch die Öffnungsbewegung der Verschlussvorrichtung modelliert werden. Damit kann bedarfsweise auch der Einfluss der Öffnungsbewegung auf die Belichtung des Bildsensors 4 abgebildet werden. Üblicherweise wird die Öffnungsbewegung aber bei einer elektronischen Belichtungssteuerung keinen Einfluss auf die Belichtung haben.

Die Verschlussvorrichtung kann auch Einflüssen, wie Umwelteinflüssen (Druck, Temperatur usw.), Alterungseinflüssen, zufällige Schwankungen der Verschlussmechanik usw., unterworfen sein. Es ist daher möglich, dass die im Laborumfeld kalibrierte Dichtefunktion $\omega(p,t)$ im realen Betrieb die tatsächlichen Gegebenheiten nicht exakt abbildet. Um diese Abweichungen zur ermittelten Dichtefunktion $\omega(p,t)$ festzustellen, und gegebenenfalls in weiterer Folge auch zu korrigieren, kann wie folgt vorgegangen werden.

Mit Hilfe einer bekannten Bildanalyse eines mit der Kamera 3 aufgenommenen Bildes kann die auftretende Bewegungsunschärfe im Bild gemessen und daraus angepasste Werte für die Funktionsparameter $\alpha$ eines globalen Modells für die Dichtefunktion $\omega(p,t)$ abgeleitet werden. Hierfür können im aufgenommenen Bild geeignete Bereiche mit markanten Strukturen bzw. charakteristischen Formen gesucht werden, typischerweise mit gradientenbasierten Methoden zur Kantendetektion, und mit bekannten Verfahren die Blur-Kernel berechnet werden. Eine Möglichkeit ist die Anwendung von sogenannter Blind-Deconvolution. Die aus den Bilddaten ermittelten Blur-Kernel werden dann als Basis für das Optimieren der Funktionsparameter $\alpha$ des globalen Modells für die Dichtefunktion $\omega(p,t)$ verwendet.

Kameras 3, insbesondere für Anwendungen im Bereich der Photogrammetrie oder Geomatik, überwachen oftmals die Verschlussbewegung einer Verschlussvorrichtung, um Fehlfunktionen zu erkennen. Hierfür vorgesehene Verschlussüberwachungseinheiten liefern eine Rückmeldung über die Bewegung der Verschlussvorrichtung. Eine beispielhafte Ausgestaltung einer Verschlussüberwachungseinheit ist in Form einer konstanten Lichtquelle, beispielsweise ein LED, und eines Lichtsensors, der das Licht von der Lichtquelle detektiert. Die Verschlussvorrichtung ist zwischen der Lichtquelle und dem Lichtsensor angeordnet, sodass der Lichtsensor bei geschlossener Verschlussvorrichtung kein Licht von der Lichtquelle erfasst und beim Öffnen oder Schließen in Abhängigkeit von der Bewegung der Verschlussvorrichtung Licht von der Lichtquelle erfasst. Selbstverständlich ist die Verschlussüberwachungseinheit so auszuführen, dass das Licht der Lichtquelle die eigentlich Bildaufnahme nicht beeinflusst bzw. das Objektlicht des aufgenommenen Objekts nicht vom Lichtsensor der Verschlussüberwachungseinheit erfasst wird. Die vom Lichtsensor erfasst Lichtintensität kann zwar keinem Bildpunkt p der Bildaufnahme direkt zugeordnet werden, kann aber trotzdem genutzt werden, um Rückmeldung über den Zustand der Verschlussvorrichtung zu erhalten.

Die mit dem Lichtsensor erfasst Lichtintensität wird einen bestimmten zeitlichen Verlauf über die Verschlussbewegung aufweisen. Aus diesem zeitlichen Verlauf können bestimmte Informationen gewonnen werden. Beispielsweise kann der Beginn der Öffnung oder des Schließens der Verschlussvorrichtung oder das komplette Schließen der Verschlussvorrichtung erkannt werden. Ebenso könnten bestimmte Zeitpunkte der Verschlussbewegung erfasst werden, beispielsweise der Zeitpunkt bei 20% und 75% der Verschlussbewegung. Daraus könnte eine Steilheit der Verschlussbewegung abgeleitet werden, die eine Aussage über die Geschwindigkeit der Verschlussvorrichtung ermöglicht. Über die Beobachtung der Verschlussbewegung mit dem Lichtsensor über eine Mehrzahl von Verschlussvorgängen, lassen sich dann Rückschlüsse über den Zustand der Verschlussvorrichtung oder von Einflüssen auf die Verschlussvorrichtung ableiten. Hierfür ist natürlich von einer anfänglich kalibrierten Verschlussbewegung als Referenz auszugehen. Kommt es beispielsweise über die Einsatzdauer der Verschlussvorrichtung zu einem zeitlichen Offset zwischen den Zeitpunkten des Beginns der Öffnung oder des Schließens oder des Endes der Öffnung oder des Schließens, kann auf einen Alterungseinfluss oder Umgebungseinfluss geschlossen werden. Ein solcher Offset kann dann beispielsweise auch bei der Dichtefunktion $\omega(p,t)$ berücksichtigt werden, um die Dichtefunktion $\omega(p,t)$ an die aktuellen Gegebenheiten anzupassen. Eine sich verändernde Steilheit der Verschlussbewegung kann ebenso genutzte werden, um die Form der Kurve der Dichtefunktion $\omega(p,t)$ daran anzupassen.

**Patentansprüche**

1. Verfahren zur Bildkorrektur einer Bildunschärfe in einer digitalen Bildaufnahme (1) eines Objekts (2), wobei die Bildaufnahme (1) mit einem Bildsensor einer Kamera (3) aufgenommen wird und sich aufgrund einer Relativbewegung zwischen der Kamera (3) und dem Objekt (2) während einer Belichtungszeit T der Bildaufnahme (1) die Abbildung eines Objektpunktes (G) des Objekts (2) auf einen Bildpunkt (p) in der Bildaufnahme b(p) ändert, sodass die Abbildung des Objektpunktes (G) in der Bildaufnahme (1) während der Belichtungszeit T zwischen einen Belichtungsstartzeitpunkt Ts und einem Belichtungsendzeitpunkt $T_E$ entlang einer Bildtrajektorie (BT) wandert und dadurch in der Bildaufnahme (1) eine Bildunschärfe entsteht, wobei ein Zusammenhang zwischen einem Bildpunkt (p) in der unscharfen Bildaufnahme b(p) und einem Bildpunkt (p) einer geschärften Bildaufnahme I(p) mit einem mathematischen Modell $b(p) = f(\omega, I, H, T, p [,\eta])$ modelliert wird, wobei das Modell die Relativbewegung zwischen der Kamera und dem Objekt (2) während der Belichtungszeit T durch einen Transformationsoperator H berücksichtigt und eine Dichtefunktion $\omega$ enthält, die einen Einfluss der Kamera (3) auf die Belichtung während der Belichtungszeit T beschreibt, und $\eta$ optional am Bildsensor während der Belichtung auftretendes Rauschen beschreibt, und wobei zur Bildkorrektur aus der unscharfen Bildaufnahme b(p) am Bildpunkt (p) und dem Modell ein geschärftes Bild I(p) am Bildpunkt (p) ermittelt wird, **dadurch gekennzeichnet, dass** im mathematischen Modell eine bildpunktabhängige Dichtefunktion $\omega(p,t)$ verwendet wird, mit der ein unterschiedlicher Einfluss der Kamera (3) auf die Belichtung verschiedener Bildpunkte (p) der Bildaufnahme (1) bei der Bildkorrektur berücksichtigt wird.

2. Verfahren nach Anspruch 1, **dadurch gekennzeichnet, dass** das mathematische Modell in der Form

$$b(p) = \int_{T_S}^{T_E} \omega(p,\tau) l\big(H(\tau,p)\big) d\tau \big[+\eta(p)\big]$$

verwendet wird, wobei $\eta(p)$ optional ein Rauschen am Bildpunkt (p) beschreibt.

3. Verfahren nach Anspruch 1 oder 2, **dadurch gekennzeichnet, dass** die unscharfe Bildaufnahme $B[i, j] = b(p_{i,j})$ und die geschärfte Bildaufnahme $L[i,j] = l(p_{i,j})$ in eine Menge an Pixeln $\left\{\Omega_{i,j}\right\}_{i=0,j=0}^{H-1,W-1}$ mit $\Omega_{i,j} = [i, i + 1] \otimes [j, j+1]$ eines diskreten Bildbereichs $\Omega_h$ diskretisiert wird, mit der Anzahl H der Pixel in der Höhe und der Anzahl W der Pixel in der Breite des Bildsensors, wobei $p_{i,j}$ die geometrischen Mittelpunkte der Pixel $\Omega_{i,j}$ angibt.

4. Verfahren nach Anspruch 3, **dadurch gekennzeichnet, dass** das mathematische Modell durch Anwendung einer numerischen Integrationsformel diskretisiert wird, womit das mathematische Modell in ein lineares Gleichungs-system $B = \underbrace{\sum_{k=0}^{M-1} W_k \circ H_k}_{A} L[+\eta]$ umgewandelt wird, wobei M die Anzahl der Teilintervalle der numerischen Integrationsformel für den Integrationsbereich $[T_S, T_E]$ bezeichnet und $W_k$ die sich aus der Integrationsformel ergebende diskretisierte Dichtefunktion und $H_k$ den sich aus der Integrationsformel ergebenden diskretisierten Transformationsoperator angibt und wobei B die diskretisierte unscharfe Bildaufnahme und L die diskretisierte geschärfte Bildaufnahme angibt.

5. Verfahren nach Anspruch 4, **dadurch gekennzeichnet, dass** die diskretisierte geschärfte Bildaufnahme L in einen Subpixelbereich diskretisiert wird.

6. Verfahren nach Anspruch 4 oder 5, **dadurch gekennzeichnet, dass** das lineare Gleichungssystem gelöst wird, um die geschärfte Bildaufnahme L zu erhalten.

7. Verfahren nach Anspruch 6, **dadurch gekennzeichnet, dass** das lineare Gleichungssystem mit einem iterativen Verfahren mit einer Iterationsvorschrift $L^{k+1} = L^k \circ A^T \left(\dfrac{B}{AL^k}\right)$ oder $L^{k+1} = L^k \circ A^T \left(\dfrac{B}{AL^k}\right) \circ \dfrac{1}{1 - \lambda \, div\left(\dfrac{\nabla L^k}{|\nabla L^k|}\right)}$ mit $L^0 = B$ und einem vorgege-benen Abbruchkriterium für die Iteration gelöst wird, wobei $\lambda$ ein vorgegebener Regularisierungsparameter ist.

8. Verfahren nach Anspruch 6, **dadurch gekennzeichnet, dass** das iterative Verfahren ausgeführt wird, bis die relative Änderung aufeinanderfolgender Schätzungen k, k+1 der geschärften Bildaufnahme $L^k$, $L^{k+1}$ eine vorgegebene Grenze $\varepsilon$ unterschreitet, wobei das geschärfte Bild $L^{k+1}$ zum Zeitpunkt des Abbruchs der Iteration das gesuchte geschärfte Bild L darstellt.

9. Verfahren nach einem der Ansprüche 3 bis 8, **dadurch gekennzeichnet, dass** der diskretisierte Bildbereich $\Omega_h$ in eine Mehrzahl $d=0,...,N_D-1$ von Bildabschnitten $\Omega_d$ aufgeteilt wird, und für die Bildpunkte zumindest eines Bildabschnittes ein mathematisches Modell mit einer bildpunktabhängigen Dichtefunktion verwendet wird, sodass sich für diesen Bildabschnitt d ein lineares Gleichungssysteme der Form $B^d = A^d L^d [+\eta^d]$ ergibt.

10. Verfahren nach Anspruch 9, **dadurch gekennzeichnet, dass** für die Bildpunkte zumindest eines anderen Bildabschnittes ein mathematisches Modell mit einer bildpunktkonstanten Dichtefunktion und konstanter Bildtrajektorie verwendet wird, sodass sich für die Bildpunkte dieses Bildabschnitt ein lineares Gleichungssysteme der Form $B^d = A^d * L^d [+\eta^d]$ ergibt, mit dem mathematischen Faltungsoperator * , und die geschärften Bildaufnahme $L^d$ dieses Bildabschnitte durch eine mathematische Entfaltung ermittelt wird.

11. Verfahren nach Anspruch 9 und 10, **dadurch gekennzeichnet, dass** die geschärfte Bildaufnahme L aus den geschärften Bildaufnahmen $L^d$ der Bildabschnitte zusammengesetzt wird.

12. Verfahren nach einem der Ansprüche 1 bis 11 , **dadurch gekennzeichnet, dass** die bildpunktabhängige Dichtefunk-tion $\omega(p,t)$ ermittelt wird, indem die Kamera (3) ortsfest gehalten wird und auf ein konstantes Objekt (2) gerichtet wird und eine Serienaufnahme $\left\{b(p, t_i)\right\}_{i=0}^{N_t-1}$ bestehend aus $N_t$ einzelnen Bildaufnahmen (1) mit unterschiedlichen

Startzeitpunkten der Belichtung $\{t_i\}_{i=0}^{N_t-1}$ des konstanten Objekts (2) gemacht wird, sodass sich für einen Bildpunkt (p) eine Mehrzahl von Beobachtungen $\left\{\left(t_i, \omega_i^p\right)\right\}_{i=0}^{N_t-1}$ ergeben.

13. Verfahren nach Anspruch 12, **dadurch gekennzeichnet, dass** die Mehrzahl von Beobachtungen $\left\{\left(t_i, \omega_i^p\right)\right\}_{i=0}^{N_t-1}$

als bildpunktabhängige Dichtefunktion $\omega(p,t)$ für diesen Bildpunkt (p) gespeichert wird.

14. Verfahren nach Anspruch 12, **dadurch gekennzeichnet, dass** die Mehrzahl an Beobachtungen durch eine vorgegebene mathematische Funktion mit Funktionsparametern $\alpha_p$ mittels einer Kurvenapproximation approximiert wird,
woraus die Funktionsparameter $\alpha_p$ ermittelt werden und die mathematische Funktion mit den ermittelten Funktionsparametern $\alpha_p$ für den Bildpunkt (p) als bildpunktabhängige Dichtefunktion $\omega(p,t)$ gespeichert wird.

15. Verfahren nach einem der Ansprüche 1 bis 14, **dadurch gekennzeichnet, dass** mit der bildpunktabhängigen
Dichtefunktion $\omega(p,t)$ ein Einfluss einer Öffnungs- oder Schließbewegung einer mechanischen Verschlussvorrichtung
der Kamera (3) auf die Belichtung verschiedener Bildpunkte (p) der Bildaufnahme (1) abgebildet wird.

**Claims**

1. Method for correcting image blurring in a captured digital image (1) of an object (2), wherein the captured image (1) is
captured with an image sensor of a camera (3), and, due to a relative movement between the camera (3) and the object
(2) during an exposure time T of the captured image (1), the mapping of an object point (G) of the object (2) onto an
image point (p) in the captured image b(p) changes, such that the mapping of the object point (G) in the captured image
(1) moves along an image trajectory (BT) during the exposure time T between an exposure start time Ts and an
exposure end time $T_E$, and thereby image blurring arises in the captured image (1), wherein a relationship between an
image point (p) in the blurred captured image b(p) and an image point (p) of a sharpened captured image I(p) is
modeled using a mathematical model $b(p) = f(\omega,l,H,T,p[,n])$, wherein the model takes into account the relative
movement between the camera (3) and the object (2) during the exposure time T by means of a transformation
operator H and contains a density function $\omega$ which describes an influence of the camera (3) on the exposure during the
exposure time T, and $\eta$ optionally describes noise occurring on the image sensor during the exposure, and wherein, for
image correction, a sharpened image I(p) at the image point (p) is ascertained from the blurred captured image b(p) at
the image point (p) and the model, **characterized in that,** in the mathematical model, an image-point-dependent
density function $\omega(p,t)$ is used by means of which a different influence of the camera (3) on the exposure of different
image points (p) of the captured image (1) is taken into account during the image correction.

2. Method according to claim 1, **characterized in that** the mathematical model is used in the form

$$b(p) = \int_{T_s}^{T_E} \omega(p,\tau) l\left(H(\tau,p)\right) d\tau \left[+\eta(p)\right]$$ , where $\eta(p)$ optionally describes a noise at the image point (p).

3. Method according to claim 1 or 2, **characterized in that** the blurred captured image $B[i,j] = b(p_{i,j})$ and the

sharpened captured image $L[i,j] = l(p_{i,j})$ are discretized into a set of pixels $\left\{\Omega_{i,j}\right\}_{i=0,j=0}^{H-1,W-1}$ with $\Omega_{i,j} = [i,j+1] \otimes [j,j$
$+ 1]$ of a discrete image area $\Omega_h$, with the number H of pixels in the height and the number W of pixels in the width of the
image sensor, where $p_{i,j}$ indicates the geometric centers of the pixels $\Omega_{i,j}$.

4. Method according to claim 3, **characterized in that** the mathematical model is discretized by applying a numerical
integration formula, whereby the mathematical model is converted into a linear system of equations

$$B = \underbrace{\sum_{k=0}^{M-1} W_k \circ H_k}_{A} L [+\eta]$$ , where M denotes the number of subintervals of the numerical integration formula for the integration range $[T_S, T_E]$ and $W_k$ denotes the discretized density function resulting from the integration formula and $H_k$ denotes the discretized transformation operator resulting from the integration formula and where B denotes the discretized blurred captured image and L denotes the discretized sharpened captured image.

5. Method according to claim 4, **characterized in that** the discretized sharpened captured image L is discretized in a subpixel range.

6. Method according to claim 4 or 5, **characterized in that** the linear system of equations is solved to obtain the sharpened captured image L.

7. Method according to claim 6, **characterized in that** the linear system of equations is solved using an iterative method with an iteration rule $$L^{k+1} = L^k \circ A^T \left( \frac{B}{AL^k} \right)$$ or $$L^{k+1} = L^k \circ A^T \left( \frac{B}{AL^k} \right) \circ \frac{1}{1 - \lambda div \left( \frac{\nabla L^k}{\left| \nabla L^k \right|} \right)}$$ with $L^0$=B and

a predefined termination criterion for the iteration, where $\lambda$ is a predefined regularization parameter.

8. Method according to claim 6, **characterized in that** the iterative method is carried out until the relative change of successive estimates k, k+1 of the sharpened captured image $L^k$, $L^{k+1}$ falls below a predefined limit $\varepsilon$, wherein the sharpened image $L^{k+1}$ at the time of termination of the iteration represents the desired sharpened image L.

9. Method according to any one of claims 3 to 8, **characterized in that** the discretized image area $\Omega_h$ is divided into a plurality d=0, ..., $N_D$-1 of image sections $\Omega_d$, and a mathematical model with an image-point-dependent density function is used for the image points of at least one image section, such that a linear system of equations of the form $B^d = A^d L^d [+\eta^d]$ is obtained for this image section d.

10. Method according to claim 9, **characterized in that** a mathematical model with an image-point-constant density function and constant image trajectory is used for the image points of at least one other image section, such that, for the image points of this image section, a linear system of equations of the form $B^d = A^d * L^d [+\eta^d]$ is obtained, with the mathematical convolution operator *, and the sharpened captured image $L^d$ of this image section is ascertained by a mathematical deconvolution.

11. Method according to claims 9 and 10, **characterized in that** the sharpened captured image L is composed of the sharpened captured images $L^d$ of the image sections.

12. Method according to any one of claims 1 to 11, **characterized in that** the image-point-dependent density function $\omega$ (p,t) is ascertained by holding the camera (3) stationary and pointing it at a constant object (2) and taking a series of captures $\left\{ b(p,t_i) \right\}_{i=0}^{N_t-1}$ consisting of $N_t$ individual captured images (1) with different start times of the exposure $\left\{ t_i \right\}_{i=0}^{N_t-1}$ of the constant object (2), such that, for one image point (p), a plurality of observations $\left\{ \left( t_i, \omega_i^p \right) \right\}_{i=0}^{N_t-1}$ are obtained.

13. Method according to claim 12, **characterized in that** that the plurality of observations $\left\{ \left( t_i, \omega_i^p \right) \right\}_{i=0}^{N_t-1}$ are stored as an image-point-dependent density function $\omega(p,t)$ for this image point (p).

14. Method according to claim 12, **characterized in that** the plurality of observations are approximated by a predefined mathematical function with function parameters $\alpha_p$ by means of a curve approximation, from which the function parameters $\alpha_p$ are ascertained, and the mathematical function with the ascertained function parameters $\alpha_p$ for the

EP 4 500 449 B1

image point (p) is stored as an image-point-dependent density function $\omega(p,t)$.

15. Method according to any one of claims 1 to 14, **characterized in that** the image-point-dependent density function $\omega$ $(p,t)$ is used to map an influence of an opening or closing movement of a mechanical shutter device of the camera (3) on the exposure of different image points (p) of the captured image (1).

**Revendications**

1. Procédé permettant la correction d'image d'un flou d'image dans une prise d'image numérique (1) d'un objet (2), dans lequel la prise d'image (1) est prise avec un capteur d'image d'une caméra (3) et, en raison d'un mouvement relatif entre la caméra (3) et l'objet (2) pendant un temps d'exposition T de la prise d'image (1), la représentation d'un point d'objet (G) de l'objet (2) sur un point d'image (p) dans la prise d'image b(p) change, de sorte que la représentation du point objet (G) dans la prise d'image (1) se déplace le long d'une trajectoire d'image (BT) pendant le temps d'exposition T entre un instant de début d'exposition Ts et un instant de fin d'exposition $T_E$ et qu'il en résulte un flou d'image dans la prise d'image (1), dans lequel une relation entre un point image (p) dans la prise d'image floue b(p) et un point image (p) d'une prise d'image nette I(p) est modélisée avec un modèle mathématique $b(p) = f(\omega, l, H, T, p[, \eta])$, dans lequel le modèle tient compte du mouvement relatif entre la caméra et l'objet (2) pendant le temps d'exposition T par un opérateur de transformation H et contient une fonction de densité $\omega$ qui décrit une influence de la caméra (3) sur l'exposition pendant le temps d'exposition T, et $\eta$ décrit éventuellement du bruit apparaissant sur le capteur d'image pendant l'exposition, et dans lequel, pour la correction d'image, une image nette I(p) est déterminée au point d'image (p) à partir de la prise d'image floue b(p) au point d'image (p) et du modèle, **caractérisé en ce qu'**une fonction de densité $\omega(p,t)$ dépendant du point d'image est utilisée dans le modèle mathématique, avec laquelle fonction une influence différente de la caméra (3) sur l'exposition de différents points d'image (p) de la prise d'image (1) est prise en compte lors de la correction d'image.

2. Procédé selon la revendication 1, **caractérisé en ce que** le modèle mathématique est utilisé sous la forme

$$b(p) = \int_{T_S}^{T_E} \omega(p,\tau) l\big(H(\tau,p)\big) d\tau \big[+\eta(p)\big]$$, dans lequel $\eta(p)$ décrit facultativement un bruit au point d'image (p).

3. Procédé selon la revendication 1 ou 2, **caractérisé en ce que** la prise d'image floue $B[i,j]=b(p_{i,j})$ et la prise d'image nette $L[i,j] = l(p_{i,j})$ sont discrétisées en un ensemble de pixels $\left\{\Omega_{i,j}\right\}_{i=0,j=0}^{H-1,W-1}$ comportant $Q_{i,j} = [i, i + 1] \otimes [j, j+1]$ d'une zone d'image discrète $\Omega_h$, avec le nombre H de pixels dans la hauteur et le nombre W de pixels dans la largeur du capteur d'image, dans lequel $p_{i,j}$ indique les centres géométriques des pixels $\Omega_{i,j}$.

4. Procédé selon la revendication 3, **caractérisé en ce que** le modèle mathématique est discrétisé en appliquant une formule d'intégration numérique, transformant ainsi le modèle mathématique en un système d'équations linéaires

$$B = \underbrace{\sum_{k=0}^{M-1} W_k \circ H_k}_{A} L\big[+\eta\big]$$, dans lequel M est le nombre de sous-intervalles de la formule d'intégration numérique pour le domaine d'intégration $[T_S, T_E]$ et $W_k$ indique la fonction de densité discrétisée résultant de la formule d'intégration et $H_k$ indique l'opérateur de transformation discrétisé résultant de la formule d'intégration et dans lequel B indique la prise d'image floue discrétisée et L la prise d'image nette discrétisée.

5. Procédé selon la revendication 4, **caractérisé en ce que** la prise d'image nette L discrétisée est discrétisée en une sous-zone de pixels.

6. Procédé selon la revendication 4 ou 5, **caractérisé en ce que** le système d'équations linéaires est résolu afin d'obtenir la prise d'image nette L.

7. Procédé selon la revendication 6, **caractérisé en ce que** le système d'équations linéaires est résolu par un procédé itératif avec une règle d'itération $L^{k+1} = L^k \circ A^T \left( \dfrac{B}{AL^k} \right)$ ou $L^{k+1} = L^k \circ A^T \left( \dfrac{B}{AL^k} \right) \circ \dfrac{1}{1 - \lambda div \left( \dfrac{\nabla L^k}{|\nabla L^k|} \right)}$ avec $L^0 = B$ et un

critère d'arrêt prédéterminé pour l'itération, dans lequel $\lambda$ est un paramètre de régularisation prédéterminé.

8. Procédé selon la revendication 6, **caractérisé en ce que** le procédé itératif est mis en œuvre jusqu'à ce que la variation relative d'estimations successives k, k+1 de la prise d'image nette $L^k$, $L^{k+1}$ soit inférieure à une limite prédéterminée $\varepsilon$, dans lequel la prise d'image nette $L^{k+1}$ à l'instant de l'arrêt de l'itération représente l'image nette L recherchée.

9. Procédé selon l'une des revendications 3 à 8, **caractérisé en ce que** la zone d'image discrétisée $\Omega_h$ est divisée en une pluralité d=0,...,$N_D$-1 de sections d'image $O_d$, et un modèle mathématique avec une fonction de densité dépendant du point d'image est utilisé pour les points d'image d'au moins une section d'image, de sorte qu'un système d'équations linéaires de la forme $B^d = A^d L^d [+\eta^d]$ est obtenu pour ladite section d'image d.

10. Procédé selon la revendication 9, **caractérisé en ce que,** pour les points d'image d'au moins une autre section d'image, un modèle mathématique avec une fonction de densité constante par rapport au point d'image et une trajectoire d'image constante est utilisé, de sorte que, pour les points d'image de ladite section d'image, un système d'équations linéaires de la forme $B^d = A^d * L^d [+\eta^d]$ est obtenu, avec l'opérateur mathématique de convolution * , et la prise d'image nette $L^d$ de ladite section d'image est déterminée par une déconvolution mathématique.

11. Procédé selon la revendication 9 et 10, **caractérisé en ce que** la prise d'image nette L est composée des prises d'image nettes $L^d$ des sections d'image.

12. Procédé selon l'une des revendications 1 à 11 , **caractérisé en ce que** la fonction de densité $\omega(p,t)$ dépendant du point d'image est déterminée en maintenant la caméra (3) fixe et en la dirigeant vers un objet (2) constant et en effectuant une prise d'image en série $\left\{ b(p,t_i) \right\}_{i=0}^{N_t-1}$ composée de $N_t$ prises d'image (1) individuelles avec différents instants de début de l'exposition $\left\{ t_i \right\}_{i=0}^{N_t-1}$ de l'objet (2) constant, de sorte qu'une pluralité d'observations

$$\left\{ \left( t_i, \omega_i^p \right) \right\}_{i=0}^{N_t-1}$$

sont obtenues pour un point d'image (p).

13. Procédé selon la revendication 12, **caractérisé en ce que** la pluralité d'observations $\left\{ \left( t_i, \omega_i^p \right) \right\}_{i=0}^{N_t-1}$ est stockée en tant que fonction de densité $\omega(p,t)$ dépendant du point d'image pour ledit point d'image (p).

14. Procédé selon la revendication 12, **caractérisé en ce que** la pluralité d'observations est approchée par une fonction mathématique prédéfinie avec des paramètres de fonction $\alpha_p$ à l'aide d'une approximation de courbe, à partir de laquelle les paramètres de fonction $\alpha_p$ sont déterminés et la fonction mathématique avec les paramètres de fonction $o_p$ déterminés pour le point d'image (p) est stockée en tant que fonction de densité $\omega(p,t)$ dépendant du point d'image.

15. Procédé selon l'une des revendications 1 à 14, **caractérisé en ce que** la fonction de densité $\omega(p,t)$ dépendant du point d'image permet de représenter une influence d'un mouvement d'ouverture ou de fermeture d'un dispositif d'obturation mécanique de la caméra (3) sur l'exposition de différents points d'image (p) de la prise d'image (1).

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2021170745 A1

**In der Beschreibung aufgeführte Nicht-Patentliteratur**

- Image Deblurring using Inertial Measurement Sensors. **NEEL JOSHI et al.** ACM SIGGRAPH 2010 Papers, SIGGRAPH '10, New York, NY, USA. Association for Computing Machinery, 2010
- **HYEOUNGHO BAE et al.** Accurate Motion Deblurring using Camera Motion Tracking and Scene Depth. *2013 IEEE Workshop on Applications of Computer Vision*
- **C.A. SHAH et al.** Automated Blur Detection and Removal in Airborne Imaging Systems using IMU Data. *International Archives of the Photogrammetry, Remote Sensing and Spatial Information Sciences*, 2012, vol. XXXIX-B1
- **ZHE HU et al.** Fast Non-uniform Deblurring using Constrained Camera Pose Subspace. *Proceedings British Machine Vision Conference*, 2012, 136.1-136.11